# EUROPEAN PATENT APPLICATION

(11) **EP 1 650 956 A1**
(43) Date of publication of application: **26.04.2006**
(21) Application number: 05022693.5
(22) Date of filing: 18.10.2005
(51) Int. Cl.: H04N 1/44, H04N 1/00, G06F 21/00, H04L 29/06

(54) **Scan apparatus capable of identifying users**

(30) Priority: 22.10.2004 JP 2004308313; 07.09.2005 JP 2005259435
(71) Applicant: Ricoh Company, Ltd., Tokyo 143-8555 (JP)
(72) Inventor: Itogawa, Akira, Tokyo (JP)
(74) Representative: Schwabe - Sandmair - Marx

(57) **Abstract**

A scanner apparatus is disclosed, which includes an operations panel, a scan execution unit, and a scan service providing unit. The scan service providing unit can request an authentication service providing unit to authenticate a user based on the verification information of the user included in a jobticket. The authentication service providing unit can provide service with respect to authentication. The JobTickets include verification information of users. The scanner apparatus further includes a JobTicket storage unit in which the JobTicket is stored. The scan execution unit executes the scan operation in accordance with scan conditions included in the JobTicket selected by the user via the operations panel.

## Description

### BACKGROUND OF THE INVENTION

### 1. Field of the Invention

The present invention relates to a scan apparatus, a scan service usage apparatus, an authentication service providing apparatus, a scan service program, a scan service usage program, an authentication service program, a recording medium, a scan method, a scan service usage method, and an authentication providing method.

### 2. Description of the Related Art

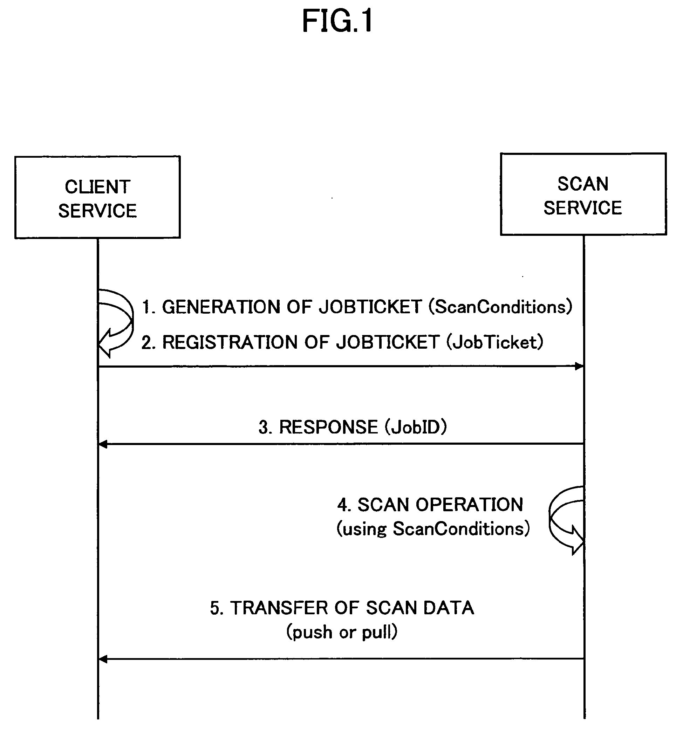

FIG. 1 shows an exemplary sequence of scan processing. FIG. 1 is a sequence diagram showing conventional scan processing.

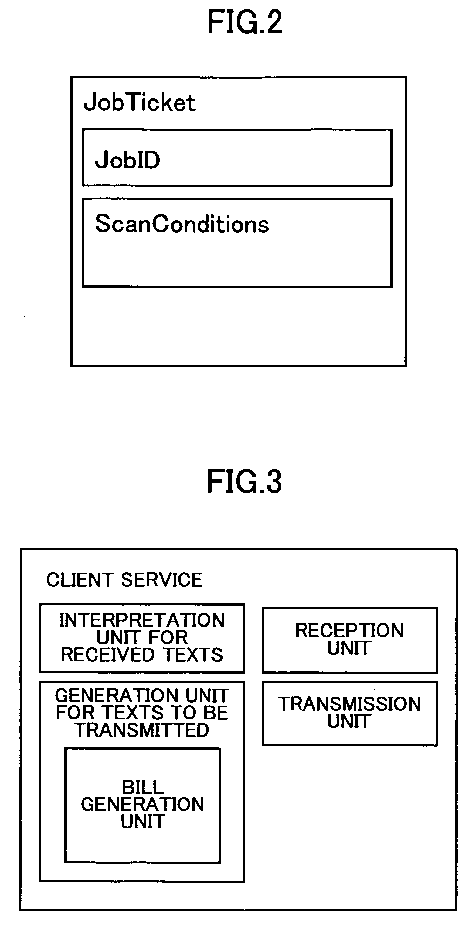

Initially, a client service generates a job ticket containing ScanCondition indicating the condition of a scan operation as described below with reference to FIG. 2 (step 1). The job ticket is an instruction (an instruction ticket) related to a job such as a scan job, for example.

The client service registers the generated job ticket to a scan service (step 2).

Once the scan service completes the registration of the job ticket, the scan service returns a response including JobID for identifying the job ticket to the client service which has requested the registration (step 3).

The scan service reads a document set on a scan apparatus (a reading apparatus) in accordance with the ScanConditions included in the job ticket in response to a request from a user, for example.

The scan service transfers scan data resulting from the reading of the document to the client service (step 5 of FIG. 1). The client service may acquire the scan data that is read by the scan service from the scan service.

FIG. 2 shows an exemplary conventional job ticket. FIG. 2 is a schematic diagram of a conventional job ticket.

As shown in FIG. 2, the job ticket (hereinafter may be referred to as a bill) includes JobID for identifying the job ticket and ScanConditions indicating the conditions of a scan operation. It is noted that the JobID is generated by the scan service, and the ScanConditions is generated by the client service.

FIG. 3 shows the functional configuration of a conventional client service. FIG. 3 is a schematic diagram showing the functional configuration of the conventional client service.

As shown in fig. 3, the conventional client service includes a reception unit, a transmission unit, an interpretation unit for received texts, and a generation unit for texts to be transmitted. The generation unit for texts to be transmitted includes a bill generation unit.

The reception unit receives the texts transmitted from the scan service. The interpretation unit for received texts interprets the texts received by the reception unit (the texts transmitted from the scan service). The generation unit for texts to be transmitted generates texts to be transmitted to the scan service. The bill generation unit generates a job ticket as shown in fig. 2. For example, the generation unit for texts to be transmitted generates a text including the job ticket generated by the bill generation unit. The transmission unit transmits the text generated by the generation unit for texts to be transmitted to the scan service.

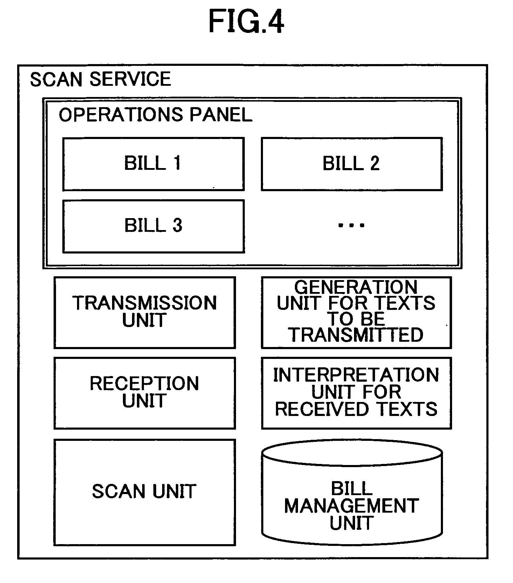

FIG. 4 shows the functions of a conventional scan service. FIG. 4 is a schematic diagram showing the functional configuration of the conventional scan service.

As shown in fig. 4, the scan service includes an operations panel, a transmission unit, a reception unit, a generation unit for texts to be transmitted, an interpretation unit for received texts, a scan unit, and a bill management unit. The operations panel may actually be a hardware device of a scanner apparatus in which the scan service is implemented. The scan unit may also actually be a hardware device of the scanner apparatus in which the scan service is implemented. The operation panel and the scan unit are shown as being included in the scan service in fig. 4 for the ease of description. The same is true in the following description.

The reception unit receives the texts transmitted from the client service. The interpretation unit for received texts interprets the texts received by the reception unit (the texts transmitted from the client service). The generation unit for texts to be transmitted generates texts to be transmitted to the client service. The bill management unit manages the bills. The operations panel displays a bill. The operations panel also inputs information related to the bill selected by a user, and sends the information to the scan unit, for example. The scan unit obtains the scan condition included in a bill based on the information of the selection, and performs a scan operation in accordance with the scan condition. For example, the generation unit for texts to be transmitted generates a text to be transmitted including scan data related to the scan operation performed by the scan unit. The transmission unit transmits the text generated by the generation unit for texts to be transmitted to the client service.

The following document describes the related art in which job tickets are used: Japanese Patent No. 3218017.

However, there exists a problem that a user can not be specified under the conventional configuration of system and services. The problem that a user can not be specified results in such a problem that: spoofing can not be avoided; services (for example, scan service) can not be fine-tuned to the requirement of each user; and the user of resources by each user can not be restricted. Additionally, there exists a problem that a determination can not be made of whether the bill is generated through a proper procedure.

Accordingly, it is a general object of the present invention to provide a novel and useful scan service of improved security and usefulness.

### SUMMARY OF THE INVENTION

Accordingly, it is a general object of the present invention to provide a novel and useful scanner apparatus.

Another and more specific object of the present invention is to provide a scanner apparatus with improved security and usefulness by identifying users.

To achieve at least one of the above objects, a scanner apparatus, includes: an operations panel; a scan execution unit; a scan service providing unit configured to provide services related to a scan operation; and a JobTicket storage unit configured to store a JobTicket related to the scan operation, the JobTickets including verification information of users, wherein the scan service providing unit requests an authentication service providing unit to authenticate a user based on the verification information of the user included in the JobTicket stored in the JobTicket storage unit, the authentication service providing unit configured to provide service related to authentication; and the scan execution unit executes the scan operation in accordance with scan conditions included in the JobTicket selected by the user via the operations panel.

The scanner apparatus includes the operations panel, the scan execution unit, and the scan service providing unit. The scan service providing unit can provide services related to a scan operation, and request the authentication service providing unit to authenticate a user based on the verification information of the user included in the JobTicket. The authentication service providing unit can provide service with respect to authentication. The JobTickets include verification information of users. The scanner apparatus further includes the JobTicket storage unit in which the JobTicket is stored. The scan execution unit executes the scan operation in accordance with scan conditions included in the JobTicket selected by the user via the operations panel.

According to another aspect of the present invention, a scan service usage apparatus includes a scan service usage unit configured to use scan services provided by a scan service providing unit; and an authentication ticket storage unit configured to store authentication ticket of a user, wherein the scan service usage unit generates verification information of a user including the authentication ticket stored in the authentication ticket storage unit, and transmits a JobTicket related to a scan operation including the verification information of the user to the scan service providing unit.

The scan service usage apparatus includes a scan service usage unit, and an authentication ticket storage unit. The scan service usage unit generates verification information of a user including the authentication ticket stored in the authentication ticket storage unit, and transmits a JobTicket related to a scan operation including the verification information of the user to the scan service providing unit to use scan services provided by the scan service providing unit. The authentication ticket storage unit can store authentication ticket of a user.

According to yet another aspect of the present invention, an authentication service providing apparatus includes an authentication service providing unit configured to provide services related to authentication, and a master authentication ticket storage unit configured to store masters of authentication tickets, wherein the authentication service providing unit, in response to receipt of a request to register the user including the user identifier for identifying the user and an upper rank user identifier for identifying an upper rank user with respect to authentication, generates a master authentication ticket including the user identifier and the upper rank user identifier, and stores the generated master authentication ticket to the master authentication ticket storage unit.

The authentication service providing apparatus includes an authentication service providing unit, and a master authentication ticket storage unit. When receiving a request to register the user including the user identifier for identifying the user and an upper rank user identifier for identifying an upper rank user with respect to authentication, the authentication service providing unit generates a master authentication ticket including the user identifier and the upper rank user identifier, and stores the generated master authentication ticket to the master authentication ticket storage unit.

In addition, according to yet other aspects of the present invention, a scan service program product, a scan service usage program product, an authentication service program product, a scan operation execution method, a scan service usage method, and an authentication service providing method are provided.

Other objects, features, and advantages of the present invention will become more apparent from the following detailed description when read in conjunction with the accompanying drawings.

### BRIEF DESCRIPTION OF THE DRAWINGS

FIG. 1 is a sequence diagram showing conventional scan processing;
FIG. 2 is a schematic diagram of a conventional job ticket;
FIG. 3 is a schematic diagram showing the functional configuration of the conventional client service;
FIG. 4 is a schematic diagram showing the functional configuration of the conventional scan service;
FIG. 5 is a block diagram showing an exemplary hardware configuration of a scan apparatus;
FIG. 6 is a block diagram showing an exemplary hardware configuration of an authentication service providing apparatus;
FIG. 7 is a block diagram showing an exemplary hardware configuration of a client apparatus;
FIG. 8 is a schematic diagram showing an exemplary JobTicket;
FIG. 9 is a schematic diagram for explaining an exemplary UserTicket;
FIG. 10 is a schematic diagram for explaining an exemplary UserCredentials;
FIG. 11 is a sequence diagram showing exemplary user registration processing;
FIG. 12 is a schematic diagram showing the functional configuration of exemplary authentication service related to the user registration processing;
FIG. 13 is a first conceptual diagram showing the hierarchical relation of users in authentication;
FIG. 14 is a sequence diagram showing exemplary UserTicket generation processing;
FIG. 15 is a schematic diagram showing the functional configuration of exemplary authentication service related to the UserTicket generation processing;
FIG. 16 is a sequence diagram showing exemplary JobTicket generation processing;
FIG. 17 is a schematic diagram showing the functional configuration of exemplary client service and scan service related to the JobTicket generation processing;
FIG. 18 is a sequence diagram showing exemplary authentication processing;
FIG. 19 is a schematic diagram showing the functional configuration of exemplary authentication service related to the authentication processing;
FIG. 20 is a first sequence diagram showing exemplary hierarchical relation confirmation processing;
FIG. 21 is a second conceptual diagram showing the hierarchical relation of users in authentication;
FIG. 22 is a sequence diagram showing exemplary JobTicket registration processing;
FIG. 23 is a sequence diagram showing exemplary authentication processing of an operator;
FIG. 24 is a schematic diagram showing the functional configuration of exemplary scan service related to the authentication processing of an operator;
FIG. 25 is a sequence diagram showing exemplary job selection processing;
FIG. 26 is a second sequence diagram showing exemplary hierarchical relation confirmation processing;
FIG. 27 is a schematic diagram showing the functional configuration of an exemplary scan service and authentication service related to the job selection processing and the hierarchical relation confirmation processing;
FIG. 28 is a sequence diagram showing exemplary scan execution processing;
FIG. 29 is a schematic diagram showing the functional configuration of an exemplary scan service related to the scan execution processing;
FIG. 30 is a schematic diagram showing an exemplary transition of screen related to the job selection in the operations panel;
FIG. 31 is a sequence diagram showing exemplary job change or deletion processing;
FIG. 32 is a schematic diagram showing the case in which a JobTicket has multiple UserTickets of the same type;
FIG. 33 is a second schematic diagram showing an exemplary JobTicket;
FIG. 34 is a sequence diagram showing exemplary scan processing in the case in which the ScanConditions are registered to the scan service;
FIG. 35 is a schematic diagram showing the case in which the ScanConditions include restriction conditions related to the scan execution; and
FIG. 36 is a sequence diagram showing exemplary hierarchical relation confirmation processing and scan execution processing in a scan service in the case in which a ScanPermission is included in the ScanConditions.

### DETAILED DESCRIPTION OF THE PREFERRED EMBODIMENTS

A description of the preferred embodiments of the present invention is now given below with reference to the drawings.

### [FIRST EMBODIMENT]

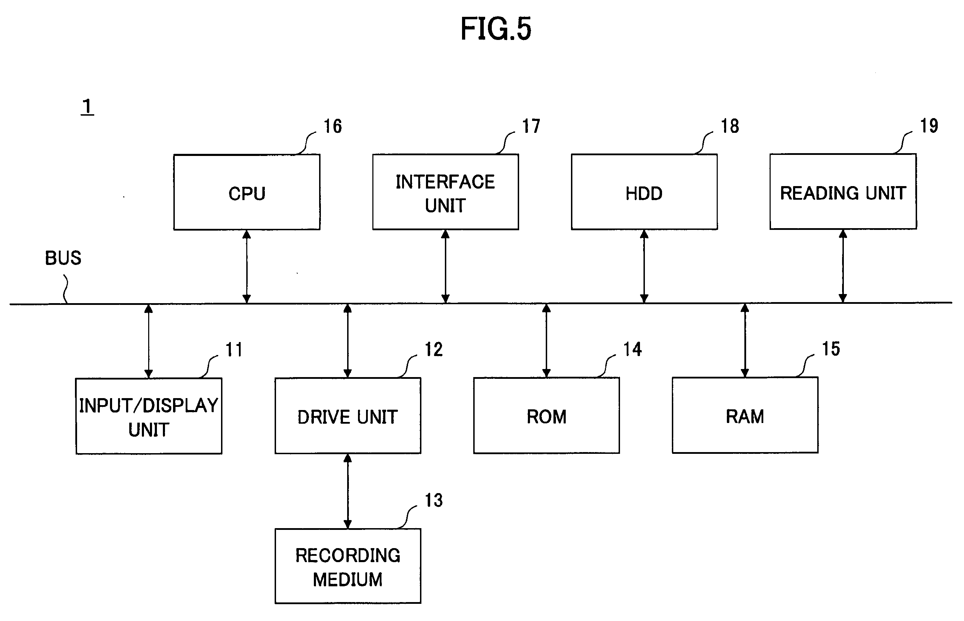

FIG. 5 is a block diagram showing an exemplary hardware configuration of a scan apparatus. As showing in FIG. 5, a scan apparatus 1 includes an input/display unit 11, a drive unit 12, ROM (Read Only Memory) 14, RAM (Random Access Memory) 15, CPU (Central Processing Unit) 16, an interface unit 17, HDD (Hard Disk Drive) 18, and a reading unit 19.

The input/display unit 11 includes an operations panel for inputting various operational signals to the scan apparatus 1 and for displaying various items of information. The interface unit 17 is an interface for connecting the scan apparatus 1 to a network, for example.

A program corresponding to the scan service 50 (hereinafter referred to as a scan service program), which is described below, may be already installed in the scan apparatus 1, or may be provided to the scan apparatus 1 using the recording medium 13 such as a SD memory card, or may be downloaded via a network. The recording medium 13 is set in the drive unit 12, and the scan service program is installed into the HDD 18 via the drive unit 12.

The ROM 14 stores various data. When the scan apparatus 1 is activated, various programs including the scan service program are read from the HDD 18 and stored in the RAM 15. The CPU 16 executes the various programs including the scan service program stored in the RAM 15.

The HDD 18 also stores scan data and JobTickets 100, which are described in detail below, as well as the scan service program.

The reading unit 19 scans a document set therein in accordance with ScanConditions (to be described below) included in the JobTicket 100.

The scan service 50 may be implemented in the scan apparatus 1 as Web service, for example. In such a case, the scan service 50 may exchange messages based on Simple Object Access Protocol (SOAP) with the authentication service 60 and the client service 70, which are implemented in the authentication service providing apparatus 2 and the client apparatus 3, respectively, as Web services. Both the authentication service 60 and the client service 70 are described in detail below.

In the present embodiment, the scan service 50 is assumed to be implemented in the scanner apparatus 1. According to another embodiment, however, the scan service 50 may be implemented in a device such as a MultiFunctional Peripheral (MFP) other than the scanner apparatus 1. In the following description, the scan service 50 is assumed to be implemented in the scanner apparatus 1 to make the description simple.

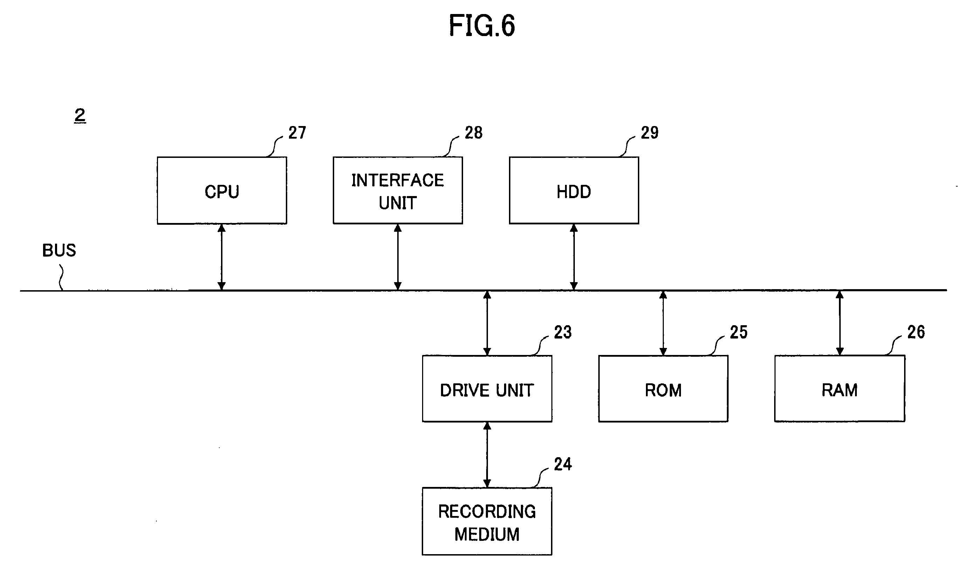

The hardware configuration of an exemplary authentication service providing apparatus 2 is shown in FIG. 6. FIG. 6 is a block diagram showing an exemplary hardware configuration of an authentication service providing apparatus;

As shown in FIG. 6, an authentication service providing apparatus 2 includes a drive unit 23, ROM 25, RAM 26, CPU 27, an interface unit 28, and HDD 29.

The interface unit 28 is an interface for connecting the authentication service providing apparatus 2 to a network, for example.

A program corresponding to the authentication service 60 (hereinafter referred to as an authentication service program) may be provided using a recording medium 24 such as a CD-ROM, or may be downloaded via the network. The recording medium 24 is set in the drive unit 23, and the authentication service program is installed into the HDD 29 via the drive unit 23.

The ROM 25 stores various data. When the authentication providing apparatus 2 is activated, various programs including the authentication service program are read from the HDD 29 and stored in the RAM 26. The CPU 27 executes the various programs including the authentication service program stored in the RAM 26.

The HDD 29 stores the authentication service program as well as data for UserTicketMaster 120, which is described below.

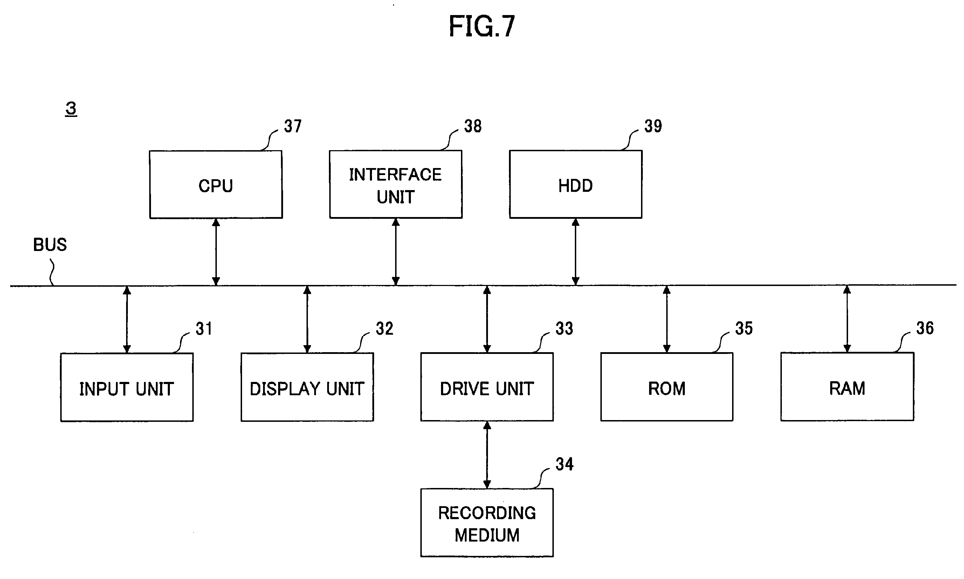

The hardware configuration of an exemplary client apparatus 3 is shown in FIG. 7. FIG. 7 is a block diagram showing an exemplary hardware configuration of a client apparatus;

As shown in FIG. 7, the client apparatus 3 includes an input unit 31, a display unit 32, a drive unit 33, ROM 35, RAM 36, CPU 37, an interface unit 38, and HDD 39.

The input unit 31 may be a keyboard and/or a mouse through which a user of the client apparatus 3 can input various operational signals to the client apparatus 3. The display unit 32 may be a display device for displaying various items of information to the user of the client apparatus 3. The interface unit 38 is an interface for connecting the client apparatus 3 to a network, for example.

A program corresponding to the client service 70 (hereinafter referred to as a client service program) may be provided to the client apparatus 3 using a recording medium 34 such as a CD-ROM, or may be downloaded to the client apparatus 3 via the network. The recording medium 34 is set in the drive unit 33, and the client service program is installed from the recording medium 34 to the HDD 39 via the drive unit 33.

The ROM 35 stores various data. When the client apparatus 3 is activated, various programs including the client service program are read from the HDD 39 and stored in the RAM 36. The CPU 37 reads and executes the various programs including the client service program stored in the RAM 36.

The HDD 39 stores the client service program as well as data for UserTicket, which is described below.

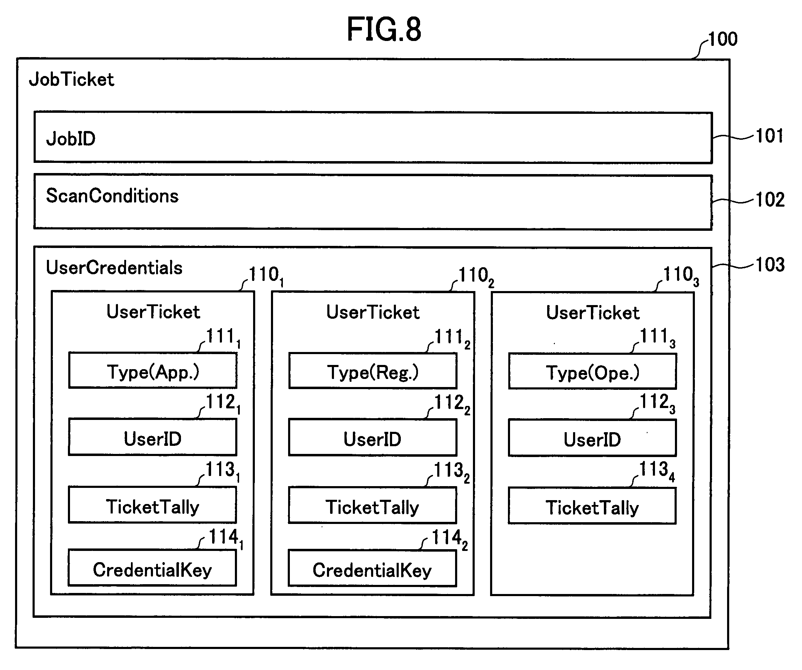

An exemplary JobTicket 100 is shown in FIG. 8. FIG. 8 is a schematic diagram showing an exemplary JobTicket. In the drawing, "Approver" may be abbreviated as "App."; "Registrar" may be abbreviated as "Reg."; and "Operator" may be abbreviated as "Ope."

As shown in FIG. 8, the JobTicket 100 includes a JobID 101, ScanConditions 102, and UserCredentials 103.

The JobID 101 is an identifier for identifying the JobTicket 100. The ScanConditions 102 is information related to conditions for a scan operation. The UserCredentials 103 are objects used for the authentication of users. The authentication service 60 generates the UserCredentials 103, and the client service 70 has the UserCredentials 103 contained in the JobTicket 100.

For example, the scan service 50 receives the authentication information of a user from the operations panel, for example, and the authentication service authenticates the user in accordance with the authentication information and the UserCredentials 103. According to the above arrangements, the scan apparatus 1 can authenticate users.

As shown in FIG. 8, the UserCredentials 103 includes a UserTicket 1101 for authenticating an approver who has approved the issuance of the JobTicket 100, a UserTicket 1102 for authenticating a registrar who approved the operator to perform scan operations, and a UserTicket 1103 for authenticating the operator who performs the scan operation.

In addition, each UserTicket 110 includes Type 111, UserID 112, TicketTally 113, and CredentialKey 114.

The Type 111 indicates the type of the UserTicket 110, that is, to whom the UserTicket belong, the approver, the registrar, or the operator.

The UserID 112 is an identifier for identifying a user. The TicketTally 113 indicates whether the UserTicket 110 is certainly issued by the authentication service 60.

The CredentialKey 114 is key information (or key data) used for user authentication. The CredentialKey 114 is empty when it is issued, and is attached to the UserTicket 110 by the user indicated by the UserID 112.

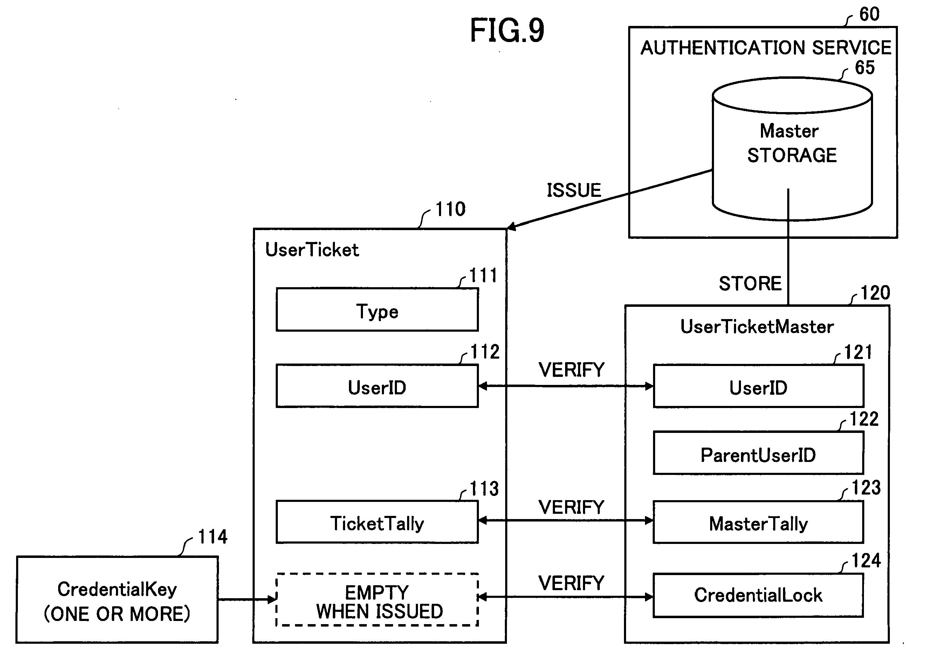

The UserTicket 110 is described below with reference to FIG. 9. FIG. 9 is a schematic diagram for explaining the UserTicket.

As shown in FIG. 9, the authentication service 60 stores a UserTicketMaster 120 that is a master of the UserTicket 110 in a master storage unit 65, for example, and issues the UserTicket 110 in accordance with the UserTicketMaster 120. The Master storage unit 65 is a hardware device such as HDD similar to the HDD 29 of the authentication service providing apparatus. The Master storage unit 65, however, is shown as included in the authentication service 60 in FIG. 9 to make the description simple. The same is true in the following description.

The UserTicketMaster 120 includes UserID 121, ParentUserID 122, MasterTally 123, and CredentialLock 124.

The UserID 122 is an identifier for identifying the user. The ParentUserID 122 is an identifier for identifying an upper rank user of the user identified by the UserID 122. The MasterTally 123 is information (or data) indicating whether the UserTicketMaster 120 is certainly issued by the authentication service 60. The CredentialLock 124 is master key information (or data) used for the user authentication.

The UserTicket 110 may contain the ParentUserID for identifying the upper rank user of the user identified by the UserID 112.

The authentication service 60 authenticates the user in response to receipt of a request including the UserTicket 110 from the scan service 50, for example, for authentication. The authentication is performed by comparing the UserID 112 of the UserTicket 110 contained in the request and the UserID 121 of a corresponding UserTicketMaster 120, by comparing the TicketTally 113 of the UserTicket 110 and the MasterTally 123 of the corresponding UserTicketMaster 120, or by comparing the CredentialKey 114 of the UserTicket 110 and the CredentialLock 124 of a corresponding UserTicketMaster 120.

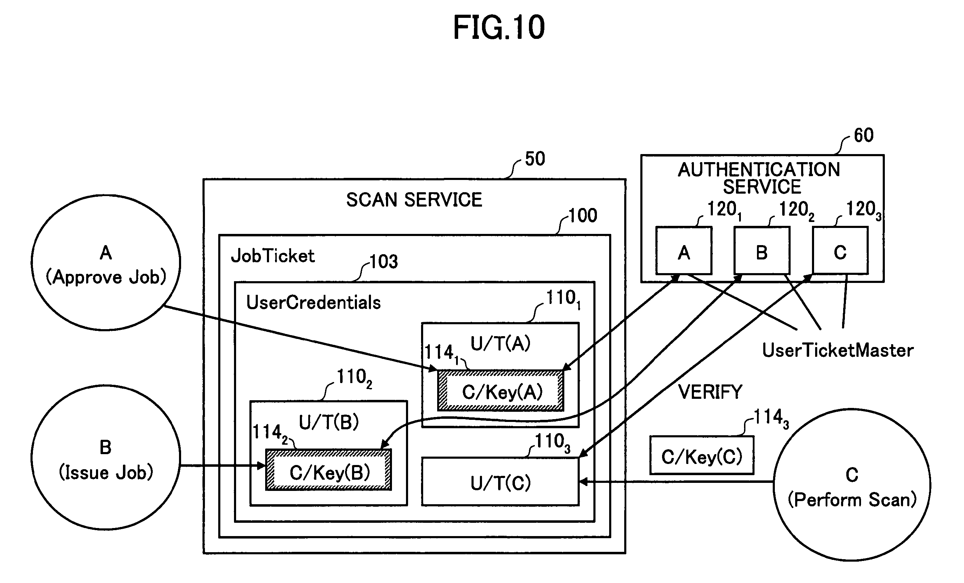

The UserCredentials 103 is described in detail below with reference to FIG. 10. FIG. 10 is a schematic diagram for explaining exemplary UserCredentials.

As shown in FIG. 10, approver's CredentialKey (abbreviated as C/Key in the figure) 1141 is added to the approver's UserTicket (abbreviated as U/T in the figure) 1101 by the approver. Registrar's CredentialKey 1142 is added to the registrar's UserTicket 1102 by the registrar. CredentialKey 1143 (for example, a password) inputted by the operator by means of the operations panel, for example, of the scan apparatus 1 is added to the UserTicket 1103 of the operator by the scan service 50, for example.

The CredentialKey 114 can be properly encrypted, and then, added to the UserTicket 110.

As described above, the authentication service 60, when receiving a request for authentication including the UserTicket 110 from the scan service 50, for example, verifies the CredentialKey 114 of the UserTicket 110 included in the request and CredentialLock 124 of corresponding UserTicketMaster 120.

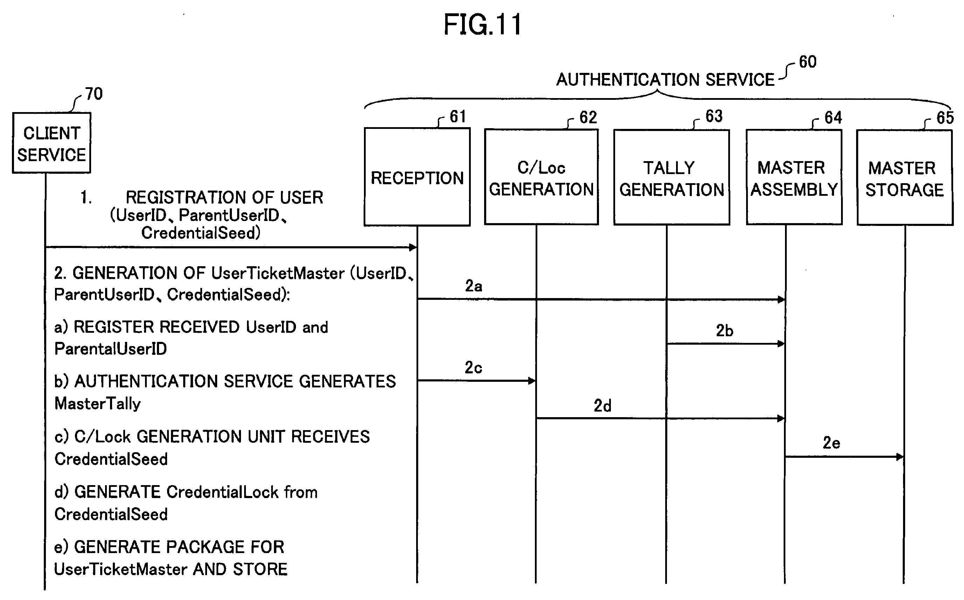

An exemplary sequence of user registration processing is show in FIG. 11. FIG. 11 is a sequence diagram showing exemplary user registration processing.

The authentication service 60 receives a request for user registration (shown in FIG. 11 as 1) including: UserID 121 for identifying a user, ParentUserID 122 for identifying upper rank users in the authentication; and CredentialSeed from which CredentialLock 124 is generated by the authentication service 60.

The authentication service 60 generates UserTicketMaster 120 based on parameters contained in the request for user registration.

In more detail, the reception unit 61 sends the UserID 121 and ParentUserID 122 contained in the request for user registration to master assembly unit 64 (shown in FIG. 11 as 2a).

Tally generation unit 63 generates and sends MasterTally 123 to the master assembly 64 (shown in FIG. 11 as 2b).

CredentialLock (C/Lock) generation unit 62 receives the CredentialSeed of the parameters contained in the user registration request from the reception unit 61 (FIG. 11 as 2c).

The C/Lock generation unit 62 generates CredentialLock 124 based on the CredentialSeed, and sends the generated CredentialLock 124 to the Master assembly unit 64 (shown in FIG. 11 as 2d).

The Master assembly unit 64 generates the UserTicketMaster 120 based on the UserID 121, the ParentUserID 122, the MasterTally 123, and the CredentialLock 124, and stores the generated UserTicketMaster 120 in the Master storage unit 65 (FIG. 11, 2e).

The user registration processing shown in FIG. 11 is repeated for each of the approver, registrar, and operator.

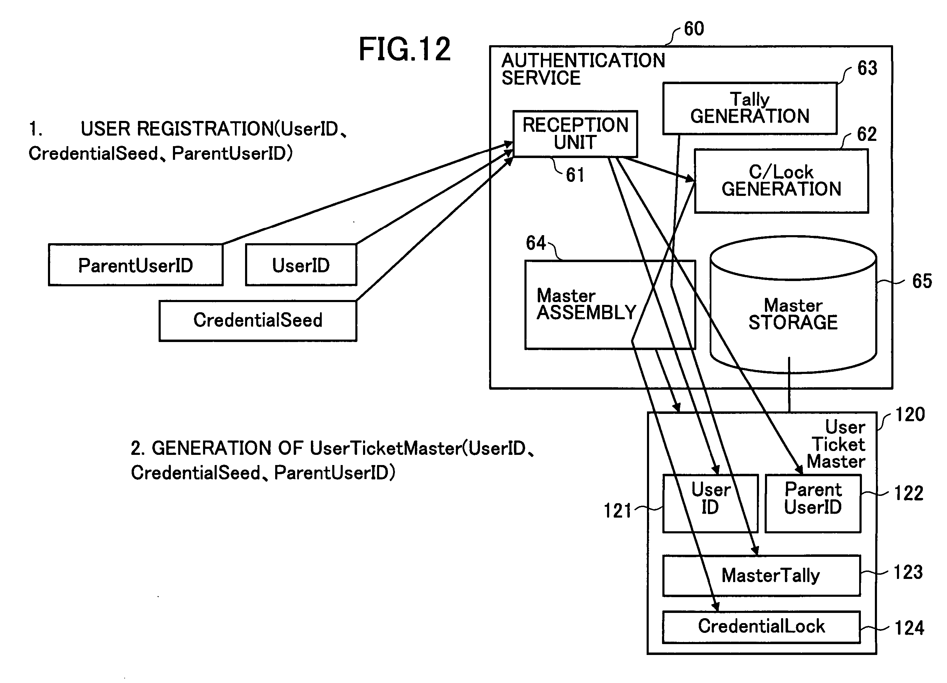

The functional configuration of the authentication service 60 related to user registration processing is shown in FIG. 12. FIG. 12 is a functional block diagram showing an exemplary authentication service related to user registration processing.

As shown in FIG. 12, the authentication service 60 includes a reception unit 61, a C/Lock generation unit 62, a Tally generation unit 63, a Master assembly unit 64, and a Master storage unit 65.

The reception unit 61 receives the request for user registration from the client service 70, and sends UserID 121 and ParentUserID 122 contained in the request to the Master assembly unit 64, or sends CredentialSeed to the C/Lock generation unit 62, for example.

The C/Lock generation unit 62 generates and sends the CredentialLock 124 to the Master assembly unit 64 based on the CredentialSeed received from the reception unit 61.

Tally generation unit 63 generates and sends MasterTally 123 to the master assembly 64.

The Master assembly unit 64 generates the UserTicketMaster 120 based on the UserID 121, the ParentUserID 122, the MasterTally 123, and the CredentialLock 124, and stores the generated UserTicketMaster 120 in the Master storage unit 65.

The Master storage unit 65 stores the UserTicketMaster 120.

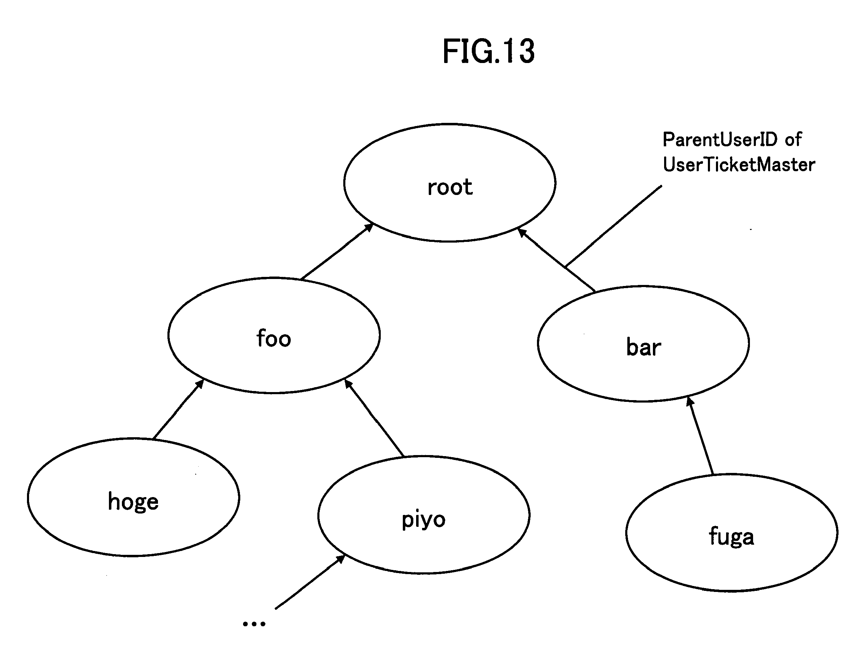

The hierarchical relation between users in authentication is conceptually shown in FIG. 13. FIG. 13 is a first conceptual diagram showing the hierarchical relation between users in authentication.

As shown in FIG. 13, the hierarchical relation between users is indicated by ParentUserID 122 of the UserTicketMaster 120.

According to the present embodiment, the approver is superior to the registrar, and the registrar is superior to the operator.

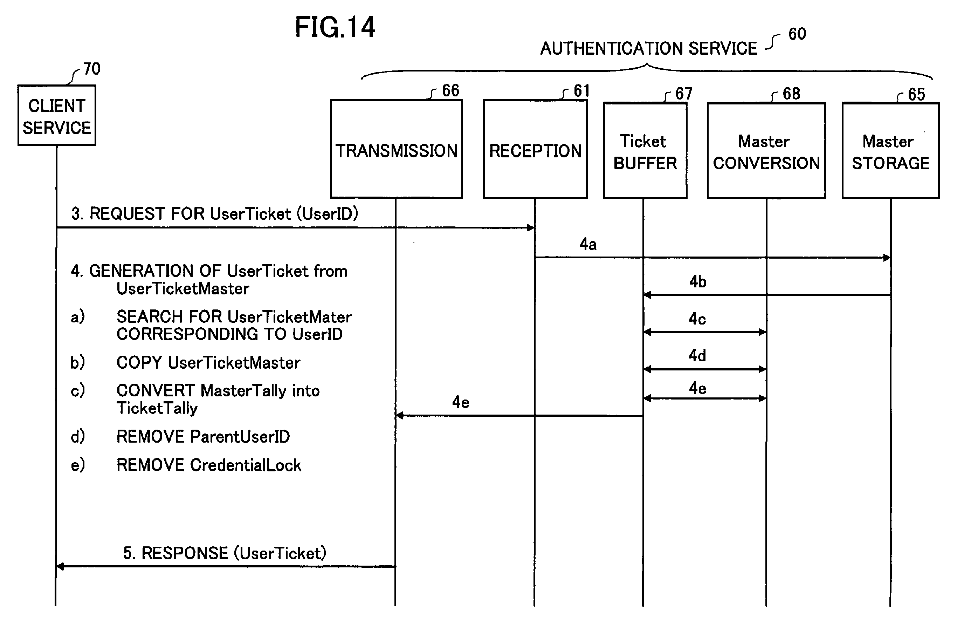

An exemplary sequence of UserTicket generation processing is show in FIG. 14. FIG. 14 is a sequence diagram showing exemplary UserTicket generation processing.

The authentication service 60 receives a request for obtaining UserTicket 110 containing the UserID 121 transmitted by the client service 70

### (shown in FIG. 14 as 3)

The authentication service 60 generates UserTicket 110 from the UserTicketMaster 120 corresponding to the UserID 121 contained in the request for obtaining the UserTicket 110 as a parameter.

In more detail, the reception unit 61 searches the Master storage unit 65 for the UserTicketMaster 120 corresponding to the UserID 121 contained in the request as a parameter (FIG. 14, 4a).

For example, the Master conversion unit 68 copies the UserTicketMaster 120 found in the Master storage unit 65 by the reception unit 61 and stores the copy in the Ticket buffer 67 as a UserTicket 110 (FIG. 14, 4b).

The Master conversion unit 68 converts the MasterTally 123 of the copied UserTicket 110 in the Ticket buffer 67 into a TicketTally 113 (FIG. 14, 4c).

The Master conversion unit 68 removes the ParentUserID 122 of the copied UserTicket 110 in the Ticket buffer 67 (FIG. 14, 4d). As described above, if the UserTicket 110 contains the ParentUserID, processing shown in FIG. 14, 4d, is not performed.

The Master conversion unit 68 removes the CredentialLock 124 of the copied UserTicket 110 in the Ticket buffer 67, and provides the UserTicket 110 from which the CredentialLock 124 has been removed to the transmission unit 66 (shown in FIG. 14 as 4e).

The transmission unit 66 transmits the UserTicket 110 received from the Master conversion unit 68 to the client service 70 that has requested for the UserTicket.

UserTicket generation processing shown in FIG. 14 is performed for each of the UserTicket 110 of the approver, the UserTicket 110 of the registrar, and the UserTicket 110 of the operator.

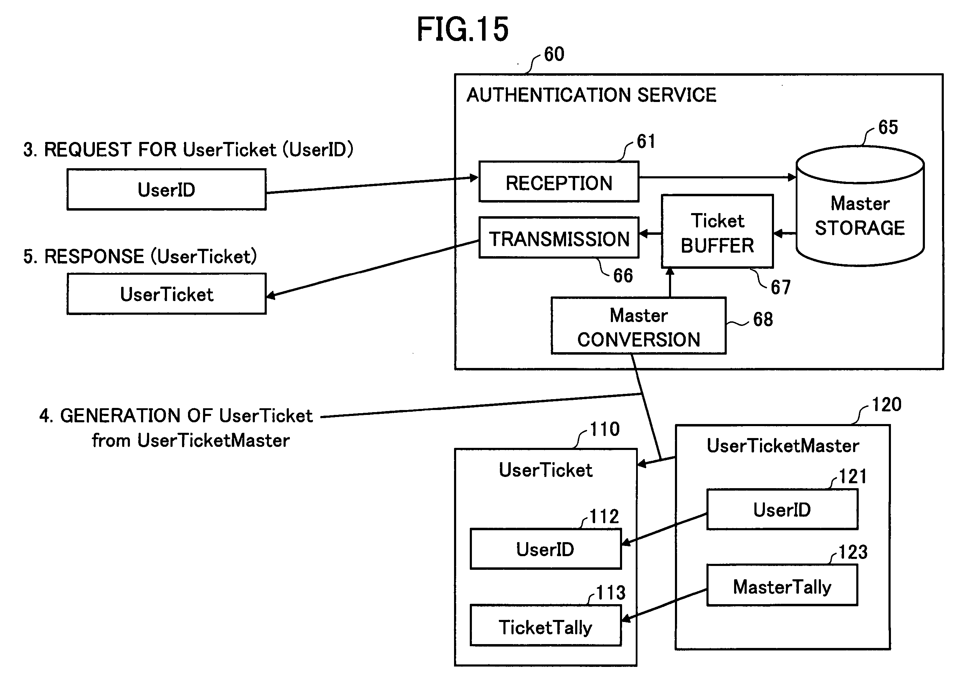

The functional configuration of the authentication service 60 related to UserTicket generation processing is shown in FIG. 15. FIG. 15 is a functional block diagram showing an exemplary authentication service related to UserTicket generation processing.

As shown in FIG. 15, the authentication service 60 includes a reception unit 61, a Master storage unit 65, a transmission unit 66, a Ticket buffer 67, and a Master conversion unit 68.

The reception unit 61 receives a request for obtaining the UserTicket 110 containing the UserID 121 transmitted by the client service 70, and searches the Master storage unit 65 for the UserTicketMaster 120 corresponding to the UserID 121 contained in the request for obtaining the UserTicket 110 as a parameter.

The Master conversion unit 68 copies the UserTicketMaster 120 found in the Mater storage unit 65 by the reception unit 61 and stores the copied UserTicketMaster as a User Ticket 110 in the Ticket buffer 67. The Master conversion unit 68 also converts the MasterTally 123 of the copied UserTicket 110 into a TicketTally 113, and removes ParentUserID 122 and/or CredentialLock 124.

The transmission unit 66 transmits the UserTicket 110 generated from the UserTicketMaster 120 by the Master conversion unit 68 to the client service that has requested for the UserTicket.

The Master storage unit 65 stores the UserTicketMaster 120. The Ticket buffer 67 is a working area used for the generation of UserTicket 110 from the UserTicketMaster 120 by the Master conversion unit 68, for example.

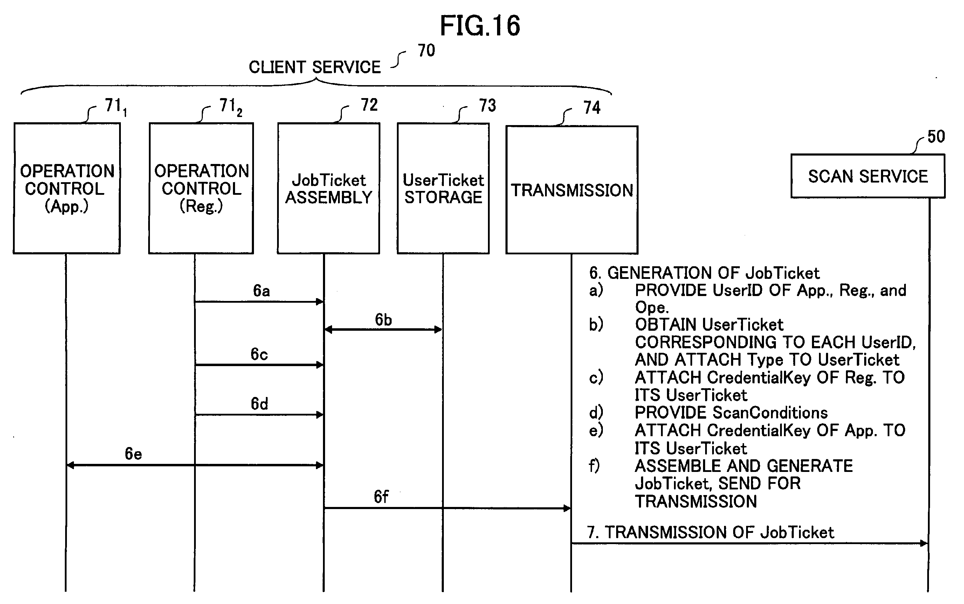

An exemplary sequence of JobTicket generation processing is show in FIG. 16. FIG. 16 is a sequence diagram showing exemplary JobTicket generation processing.

An operation control unit 712 sends the UserID 1121 of the approver, the UserID 1122 of the registrar, and the UserID 1123 of the operator inputted by the user (for example, registrar), to the JobTicket assembly unit 72 (shown in FIG. 16 as 6a).

The JobTicket assembly unit 72 obtains the UserTicket 110 corresponding to each of received UserID 112 from the UserTicket storage unit 73, and adds Type 111 to the obtained UserTicket (shown in FIG. 16 as 6b).

The operation control unit 712 sends the CredentialKey 1142 of the registrar inputted by the user (for example, registrar) to the JobTicket assembly 72. The JobTicket assembly 72 adds the received CredentialKey 1142 to the UserTicket 1102 of the registrar (shown in FIG. 16 as 6c).

The operation control unit 712 sends the ScanConditions 102 inputted by the user to the JobTicket assembly unit 72 (shown in FIG. 16 as 6d).

The JobTicket assembly unit 72 receives CredentialKey 1141 of the approver inputted by the user (for example, approver) via the operation control unit 711, for example, of another client service 70 (for example, the client service 70 installed in a client apparatus 3 of the approver), and attaches the CredentialKey 1141 of the approver to the UserTicket 1101 of the approver (shown in FIG. 16 as 6e).

The JobTicket assembly unit 72 assembles the UserTicket 1101 to which the Type 1111 and CredentialKey 1141 are attached, the UserTicket 1102 to which the Type 1112 and CredentialKey 1142 are attached, the UserTicket 1103 to which Type 1113 is attached, and consequently generates UserCredentials 103. The JobTicket assembly unit 72 further assembles the UserCredentials 103 and ScanConditions 102, and consequently generates the JobTicket 100, which is sent to the transmission unit 74 (shown in FIG. 16 as 6f).

The transmission unit 74 transmits the JobTicket 100 received from the JobTicket assembly unit 72 to the scan service 50 (shown in FIG. 16 as 7).

The UserTicket storage unit 73 is a hardware device such as HDD similar to the HDD39 of the client apparatus 3 in which the client service 70 is implemented, but is shown as included in the client service 70 in FIG. 16 to make the description simple. The same is true in the following description.

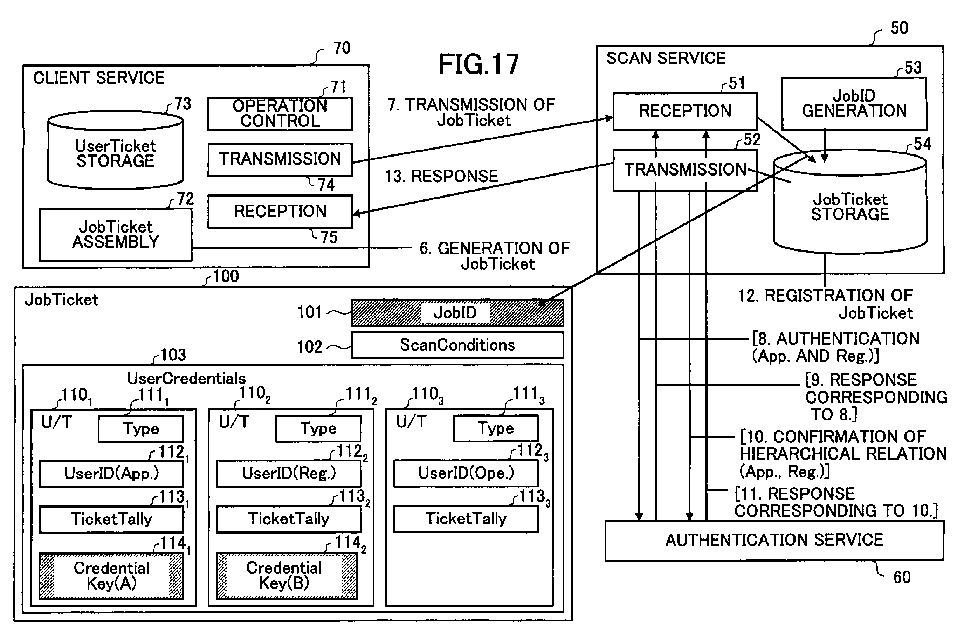

The functional configuration of the client service 70 and scan service 50 related to JobTicket generation processing is shown in FIG. 17. FIG. 17 is a functional block diagram showing an exemplary client service and scan service related to JobTicket generation processing.

As shown in FIG. 17, the client service 70 includes an operation control unit 71, a JobTicket assembly unit 72, a UserTicket storage unit 73, a transmission unit 74, and a reception unit 75.

The operation control unit 71 controls the screen of the operations panel and the input of information through the operations panel, for example. For example, the operation control unit 71 sends the following to the JobTicket assembly unit 72; the UserID 1121 of the approver, the UserID 1122 of the registrar, the UserID 1123 of the operator, CredentialKey 1142 of the registrar, ScanConditions 102, the CredentialKey 1141 of the approver, for example.

The JobTicket assembly unit 72 assembles the UserCredentials 103, and consequently generates the JobTicket 100. For example, the JobTicket assembly unit 72 obtains from the UserTicket storage unit 73 the following: UserTickets corresponding to the UserID 1121 of the approver, the UserID 1122 of the registrar, the UserID 1123 of the operator received from the operation control unit 71. The JobTicket assembly unit 72 attaches Type 1111 and CredentialKey 1141 received from the operations unit 71 to the UserTicket 1101 of the approver. The JobTicket assembly unit 72 further attaches Type 1112 and CredentialKey 1142 received from the operation control unit 71 to the UserTicket 1102 of the registrar. The JobTicket assembly unit 72 further attaches Type 1112 and CredentialKey 1142 received from the operation control unit 71 to the UserTicket 1113 of the operator. The JobTicket assembly unit 72 assembles the UserCredentials 103, and further assembles the assembled UserCredentials 103 and the ScanConditions 102 received from the operation control unit 71. Then, the JobTicket assembly unit 72 generates the JobTicket 100.

The transmission unit 74 transmits the JobTicket 100 generated by the JobTicket assembly unit 72 to the scan service 50.

The reception unit 75 receives the JobID 101 of the JobTicket 100 from the scan service 50 as a response to the JobTicket 100 sent from the transmission unit 74 to the scan service 50.

In addition, as shown in FIG. 17, the scan service 50 includes the reception unit 51, the transmission unit 52, the JobID generation unit 53, and the JobTicket storage unit 54.

The reception unit 51 receives the JobTicket 100 from the client service 70, and also receives the authentication result of the approver and the registrar, and the confirmation result of the hierarchical relation between the approver and the registrar.

The transmission unit 52 transmits the authentication request for the approver and the registrar, and the confirmation request for the hierarchical relation between the approver and the registrar to the authentication service 60, and also transmits the JobID 101 to the client service 70.

The JobID generation unit 53 generates the JobID 101, which is attached to the JobTicket 100 received from the client service 70 via the reception unit 51. Then, the JobID generation unit 53 stores the JobTicket 100 to which the generated JobID 101 is attached in the JobTicket storage unit 54.

The JobTicket storage unit 54 stores the JobTicket 100 to which the JobID 101 has been attached as shown in FIG. 17.

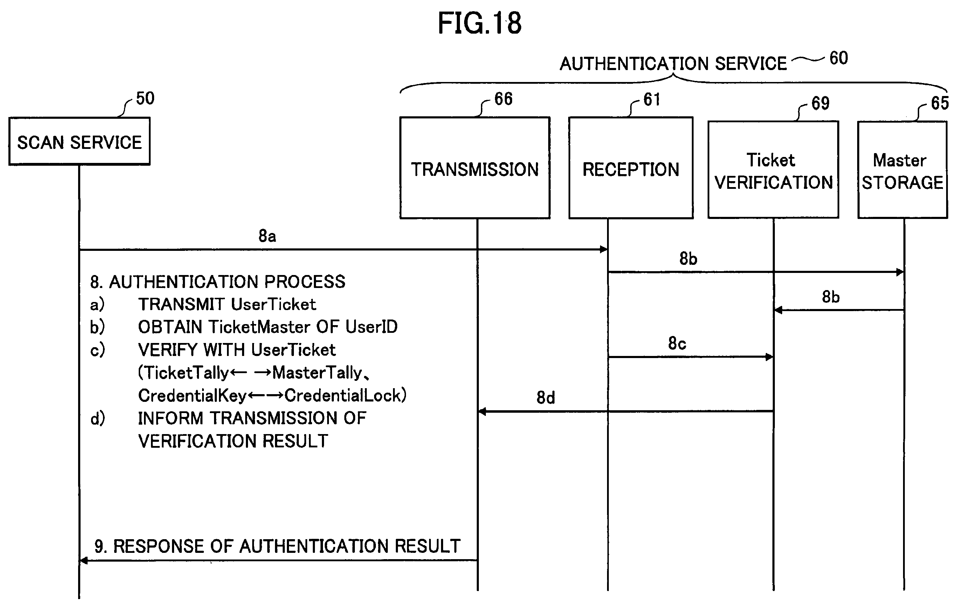

An exemplary sequence of authentication processing is show in FIG. 18. FIG. 18 is a sequence diagram showing exemplary authentication processing.

The scan service 50, in response to receipt of the JobTicket 100 from the client service, transmits the UserTicket 1101 of the approver contained in the received JobTicket 100 to the authentication service 60, requesting for the authentication of the approver (shown in FIG. 18 as 8a).

The reception unit 61 of the authentication service 60, in response to receipt of the authentication request containing the UserTicket 1101 of the approver from the scan service 50, obtains UserTicketMaster 120 corresponding to the UserID 1121 contained in the UserTicket 1101 from the Master storage unit 65. Then the reception unit 61 sends the obtained UserTicketMaster 1201 and the received UserTicket 1101 to the Ticket verification unit 69 (shown in FIG. 18 as 8b).

The Ticket verification unit 69 verifies the UserTicketMaster 1201 and the UserTicket 1101 (shown in FIG. 18 as 8c), and sends the verification result to the transmission unit 66 (shown in FIG. 18 as 8d).

In more detail, the Ticket verification unit 69 verifies the TicketTally 1131 of the UserTicket 1101 and the MasterTally 1231 of the UserTicketMaster 1201, and also verifies the CredentialKey 1141 of the UserTicket 1101 and the CredentialLock 1241 of the UserTicket Master 1201.

The transmission unit 66 transmits the verification result received from the Ticket verification unit 69 to the scan service 50 that has requested for the verification (shown in SIG. 18 as 9).

The authentication processing shown in FIG. 18 is performed for the registrar in the same fashion.

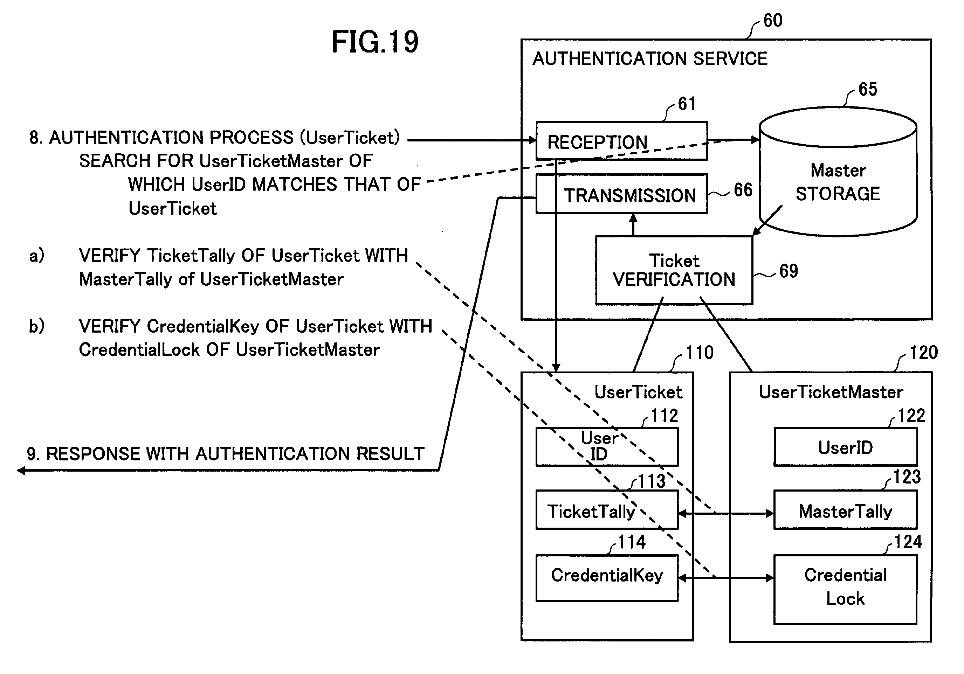

The functional configuration of the authentication service 60 related to authentication processing is shown in FIG. 19. FIG. 19 is a functional block diagram showing an exemplary authentication service related to authentication processing.

As shown in FIG. 19, the authentication service 60 includes a reception unit 61, a Master storage unit 65, a transmission unit 66, and a Ticket buffer 69.

The reception unit 61 of the authentication service 60, in response to receipt of the authentication request containing the UserTicket 110 from the scan service 50, obtains UserTicketMaster 120 corresponding to the UserID 112 contained in the UserTicket 110 from the Master storage unit 65. Then the reception unit 61 sends the obtained UserTicketMaster 120 and the received UserTicket 110 to the Ticket verification unit 69.

The Master storage unit 65 stores the UserTicketMaster 120.

The Ticket verification unit 69 verifies the TicketTally 113 of the UserTicket 1101 and the MasterTally 123 of the UserTicketMaster 120 received from the reception unit 61, and also verifies the CredentialKey 114 of the UserTicket 110 and the CredentialLock 124 of the UserTicketMaster 120, which verification results are sent to the transmission unit 66.

The transmission unit 66 transmits the verification result received from the Ticket verification unit 69 to the scan service 50 that has requested for the verification.

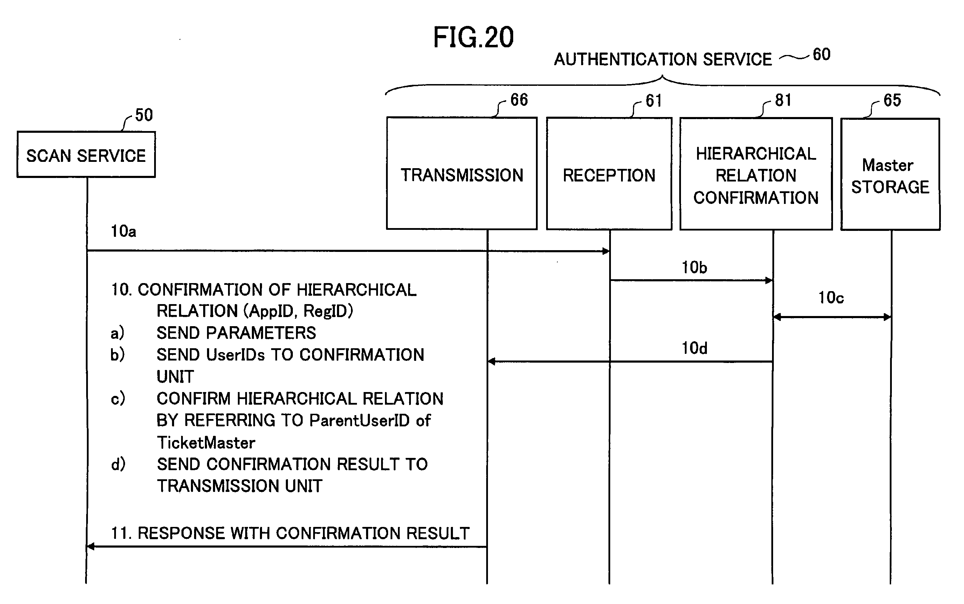

An exemplary sequence of hierarchical relation confirmation processing is show in FIG. 20. FIG. 20 is a first sequence diagram showing the hierarchical relation confirmation processing. In the following description, especially in the drawings, the UserID 1121 of the approver may be abbreviated as AppID; the UserID 1122 of the registrar may be abbreviated as RegID; and the UserID 1123 of the operator may be abbreviated as OpeID.

The scan service 50, in response to receipt of the authentication results indicating that the approver and registrar have been successfully authenticated, transmits a request for confirmation of the hierarchical relation between the approver and registrar containing the their UserIDs 1121 and 1122 to the authentication service 60 (shown in FIG. 20 as 10a).

The reception unit 61 of the authentication service 60, in response to receipt of the request for confirmation of the hierarchical relation from the scan service, sends the UserID 1121 of the approver and the UserID 1122 of the registrar contained in the confirmation request to the hierarchical relation confirmation unit 81 (shown in FIG. 20 as 10b).

The hierarchical relation confirmation unit 81 obtains UserTicketMaster 1202 from the Master storage unit 65 corresponding to the received UserID 1122 of the registrar. The hierarchical relation confirmation unit 81 confirms the hierarchical relation between the approver and registrar using the ParentUserID 122 contained in the obtained UserTicketMaster 1202 and the received UserID 1121 of the approver (shown in FIG. 20 as 10c), which confirmation result is sent to the transmission unit 66 (shown in FIG. 20 as 10d).

For example, the hierarchical relation confirmation unit 81 determines whether the ParentUserID 122 contained in the UserTicketMaster 1202 is identical to the received UserID 1121 of the approver. If a determination is made that they are identical, confirmation result indicating that the hierarchical relation is effective is sent to the transmission unit 66. If a determination is made that they are not identical, the hierarchical relation confirmation unit 81 obtains corresponding UserTicketMaster 120 from the Master storage unit 65 based on the UserID 112 indicated by the ParentUserID 122 contained in the UserTicketMaster 1202, and determines whether the ParentUserID 122 contained in the UserTicketMaster 120 is identical to the received UserID 1121 of the approver. That is, the hierarchical relation confirmation unit 81 traces upwardly users (nodes) in the hierarchical relation based on the ParentUserID 122 and determines whether the approver is positioned upper to the registrar in the hierarchical relation.

The transmission unit 66 transmits the confirmation result received from the hierarchical relation confirmation unit 81 to the scan service 50 that has requested for the verification (shown in FIG. 20 as 11).

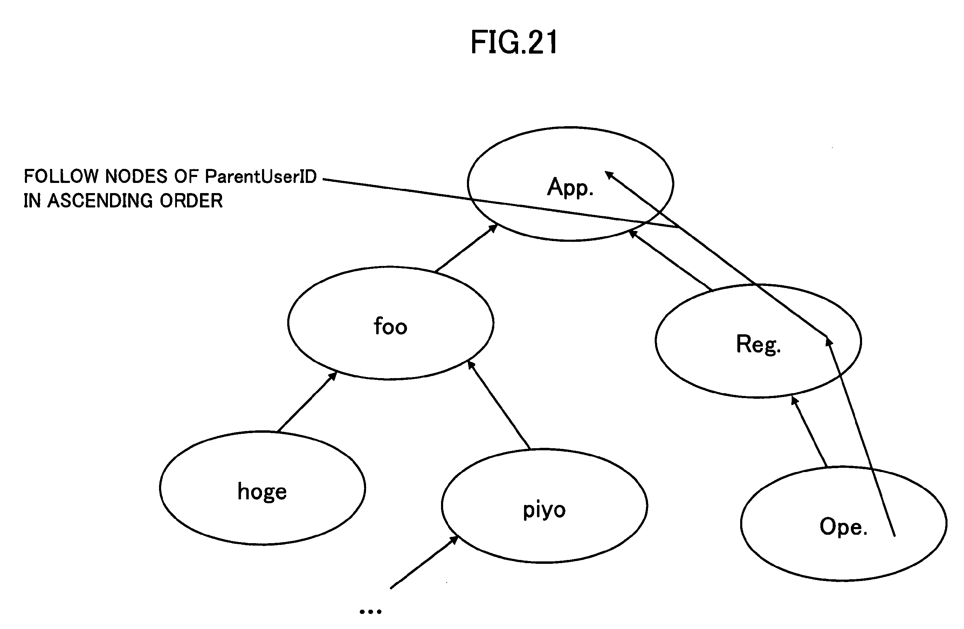

The hierarchical relation between users in authentication is conceptually shown in FIG. 21. FIG. 21 is a second conceptual diagram showing the hierarchical relation between users in authentication.

As shown in FIG. 21, the hierarchical relation confirmation unit 81 traces nodes corresponding to the ParentUserID 122 sequentially, and determines whether the approver is positioned upper to the registrar, with respect to the authentication, and whether the registrar is positioned upper to the operator, with respect to the authentication, as described below.

As described below, the scan service 50 permits the user (for example, operator) to perform the scan operation, only if the registrar is positioned under the approver, and the operator is positioned under the registrar.

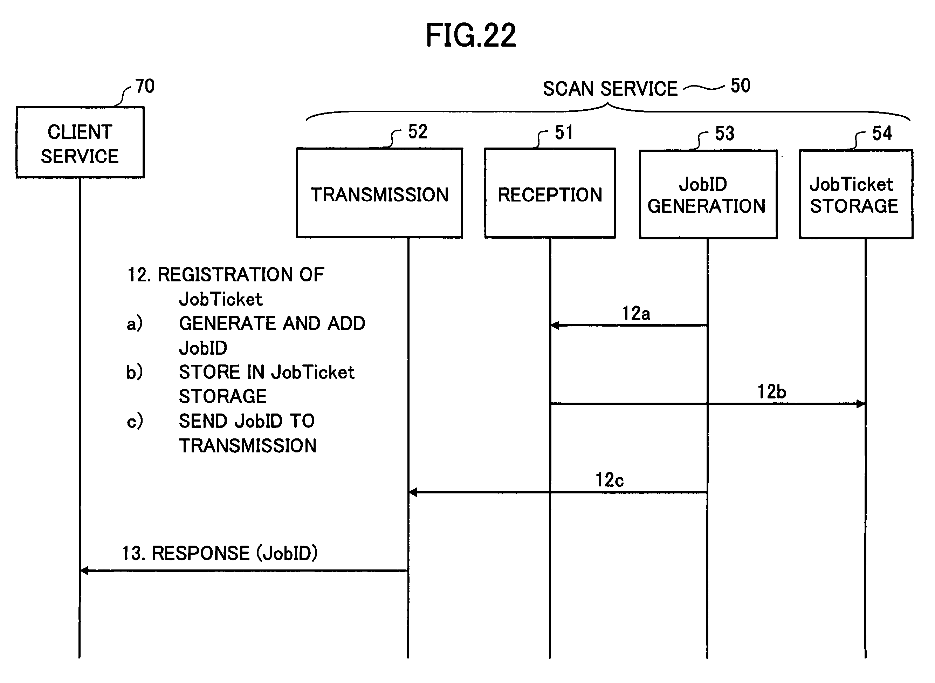

An exemplary sequence of JobTicket registration processing is show in FIG. 22. FIG. 22 is a sequence diagram showing exemplary JobTicket registration processing.

The JobID generation unit 53 of the scan service 50, in response to receipt of the confirmation result indicating that the hierarchical relation between the approver and registrar is valid, from the authentication service 60, generates JobID 101, and attaches the generated JobID 101 to the JobTicket 100, which has been received from the client service 70 and temporarily retained by the reception unit 51 (shown in FIG. 22 as 12a).

The reception unit 51 stores the JobTicket 100 to which the JobID 101 has been attached in the JobTicket storage unit 54 (shown in FIG. 22 as 12b).

In addition, the JobID generation unit 53 sends the generated JobID 101 to the transmission unit 52 (shown in FIG. 22 as 12c).

The transmission unit 52 transmits the received JobID 101 to the client service 70 as a response to the JobTicket 100.

The JobTicket storage unit 54 is a hardware device such as HDD similar to the HDD 18 of the scan apparatus 1 in which the scan service 50 is implemented, but is shown as included in the scan service 50 in FIG. 22 to make the description simple. The same is true in the following description.

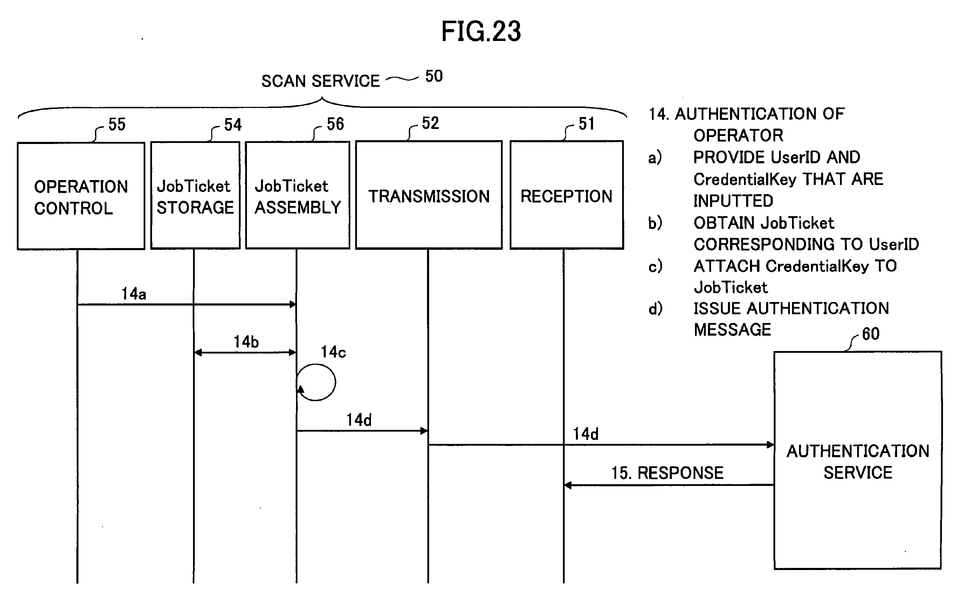

An exemplary sequence of authentication processing of the operator is show in FIG. 23. FIG. 23 is a sequence diagram showing exemplary authentication processing of the operator.

The operation control unit 55 provides the JobTicket assembly unit 56 with the UserID 1123 and CredentialKey 1143 of the operator inputted by the operator by means of the operations panel 91 (shown in FIG. 23 as 14a).

The JobTicket assembly unit 56 obtains corresponding JobTicket 100 based on the UserID 1123 received from the operation control unit 55 (shown in FIG. 23 as 14b), and attaches the CredentialKey 1143 of the operator received from the operation control unit 55 to the UserTicket 1103 of the obtained JobTicket 100 (shown in FIG. 23 as 14c).

The JobTicket assembly unit 56 attaches the CredentialKey 1143 of the operator to the UserTicket 1103, and then, issues an authentication message (authentication request) containing the UserTicket 1103, which authentication message is transmitted to the authentication service 60 by the transmission unit 52 (shown in FIG. 23 as 14d).

In addition, the reception unit 51 receives a response to the authentication message, the response including authentication result, from the authentication service 60 (shown in FIG. 23 as 15).

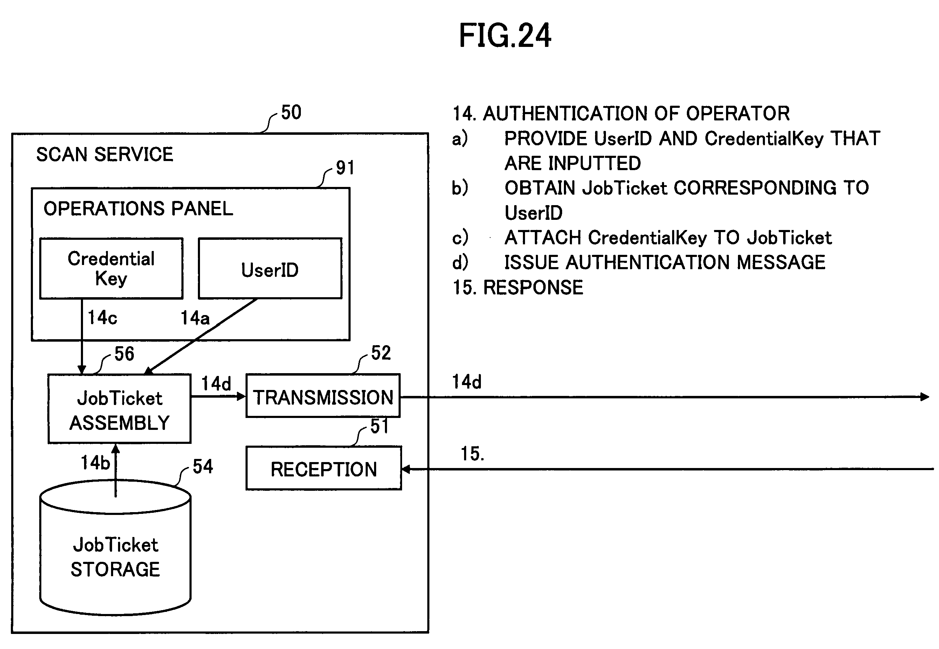

The functional configuration of the scan service 50 related to the authentication processing of the operator is shown in FIG. 24. FIG. 24 is a functional block diagram showing an exemplary scan service related to the authentication processing of the operator.

As shown in FIG. 24, the scan service 50 includes an operations panel 91, a reception unit 51, a transmission unit 52, a JobTicket storage unit 54, and a JobTicket assembly unit 56. The operations panel 91 is a hardware device such as a display unit similar to the input/display unit 11 of the scan apparatus 1 in which the scan service 50 is implemented, but is shown as included in the scan service 50 in FIG. 24 to make the description simple. The same is true in the following description. Although not shown in FIG. 24, the scan service 50 further includes an operation control unit 55.

The operations panel 91 sends the UserID 1123 and the CredentialKey 1143 input by the operator to the JobTicket assembly unit 56 via the operation control unit 55.

The JobTicket storage unit 54 stores the JobTicket 100. The JobTicket assembly unit 56 obtains corresponding JobTicket 100 from the JobTicket storage unit 54 based on the UserID 1123 received via the operation control unit 55, and attaches the CredentialKey 1143 of the operator received via the operation control unit 55 to the UserTicket 1103 of the obtained JobTicket.

In addition, after attaching the CredentialKey 1143 of the operator to the UserTicket 1103, the JobTicket assembly unit 56 issues an authentication message containing the UserTicket 1103.

The transmission unit 52 transmits the authentication message issued by the JobTicket assembly unit 56 to the authentication service 60. The authentication service 60, in response to receipt of the authentication message, performs processing shown in FIGs. 18 and 19 to authenticate the operator.

The reception unit 51 receives a response to the authentication message, the response including authentication result, from the authentication service 60. This response is the same as those shown in FIGs. 17 and 18 as "9".

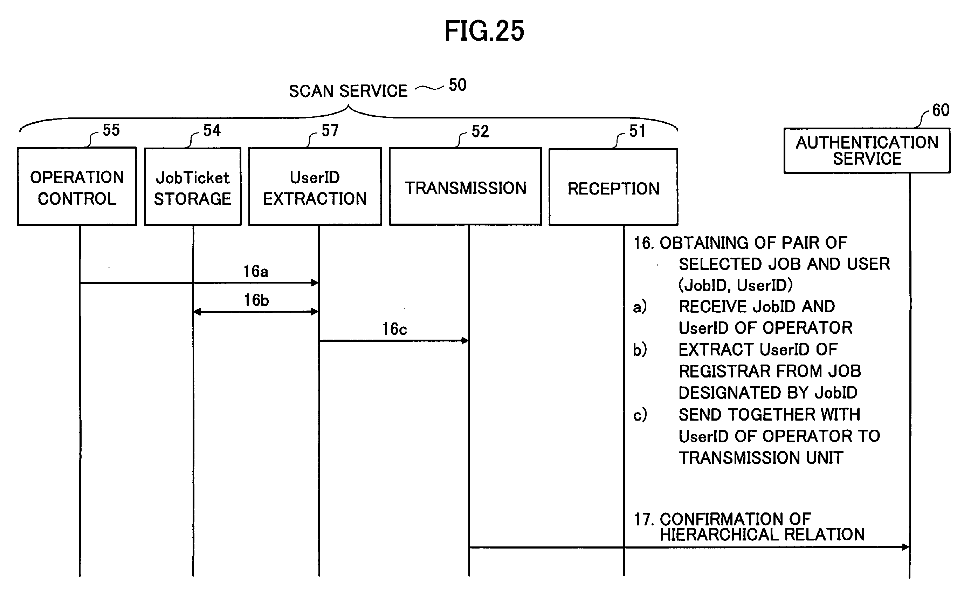

An exemplary sequence of job selection is shown in FIG. 25. FIG. 25 is a sequence diagram showing an exemplary job selection

The UserID extraction unit 57 receives via the operation control unit 55, the JobID 101 identifying the job (or JobTicket 100) selected by the operator and the UserID 1123 of the operator input by means of the operations panel 91 (shown in FIG. 25 as 16a).

The UserID extraction unit 57 obtains JobTicket 100 corresponding to the received JobID 101 from the JobTicket storage unit 54, and extracts the UserID 1122 of the registrar from the obtained JobTicket 100 (shown in FIG. 25 as 16b).

The UserID extraction unit 57 sends the extracted UserID 1122 of the registrar and the UserID 1123 of the operator received via the operation control unit 55 to the transmission unit 52 (shown in FIG. 25 as 16c).

The transmission unit 52 generates a request to confirm the hierarchical relation including the UserID 1122 of the registrar and the UserID 1123 of the operator, which request is transmitted to the authentication service 60 (shown in FIG. 25 as 17).

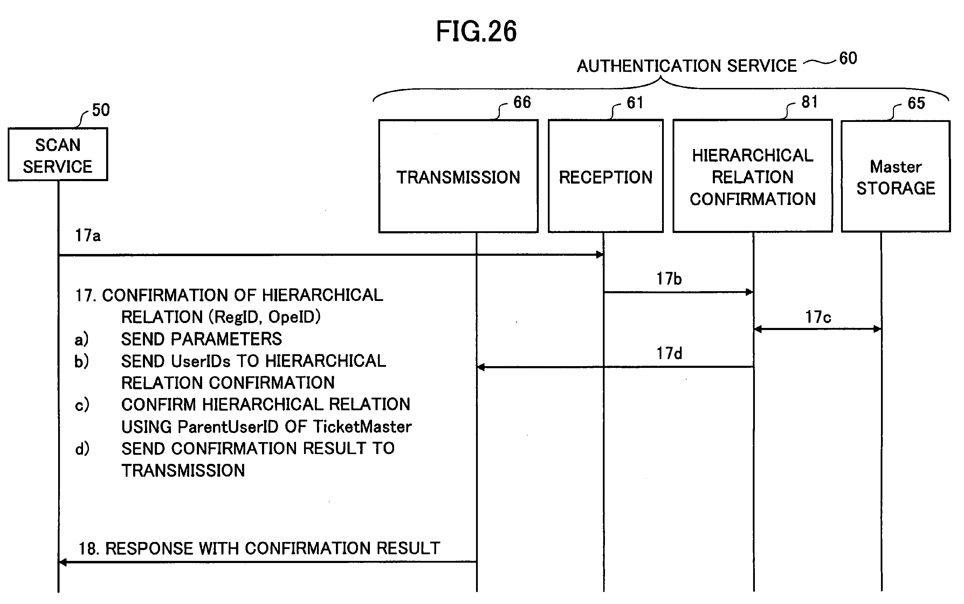

Another exemplary confirmation of hierarchical relation is shown in FIG. 26. FIG. 26 is a second sequence diagram showing hierarchical relation confirmation processing.

The transmission unit 60 receives the request to confirm the hierarchical relation including the UserID 1122 of the registrar and the UserID 1123 of the operator from the scan service 50 (shown in FIG. 26 as 17a).

The reception unit 61 sends the UserID 1122 of the registrar and the UserID 1123 of the operator contained in the received hierarchical relation confirmation request to the hierarchical relation confirmation unit 81 (shown in FIG. 26 as 17b).

The hierarchical relation confirmation unit 81 obtains the UserTicketMaster 1203 from the Master storage unit 65, corresponding to the received UserID 1123 of the operator, and confirms the hierarchical relation between the registrar and the operator using the Parent UserID 122 contained in the UserTicket Master 1203 and the received UserID 1122 of the registrar (shown in FIG. 26 as 17c). The confirmation result is sent to the transmission unit 66 (shown in FIG. 26 as 17d).

For example, the hierarchical relation confirmation unit 81 determines whether the ParentUserID 122 contained in the UserTicketMaster 1203 is identical to the received UserID 1122 of the registrar. If a determination is made that they are identical, confirmation result indicating that their hierarchical relation is valid is sent to the transmission unit 66. If a determination is made that they are not identical, the hierarchical relation confirmation unit 81 obtains corresponding UserTicketMaster 120 from the Master storage unit 65 based on the UserID 112 indicated by the ParentUserID 122 contained in the UserTicketMaster 1203, and further determines whether the ParentUserID 122 contained in the UserTicketMaster 120 is identical to the received UserID 1122 of the registrar. That is, the hierarchical relation confirmation unit 81 traces users in the hierarchical relation upwardly up to the highest rank with respect to the authentication, and determines whether the registrar is positioned above the operator.

The transmission unit 66 transmits the confirmation result received from the hierarchical relation confirmation unit 81 to the scan service 50 that has requested for the confirmation (shown in FIG. 26 as 18).

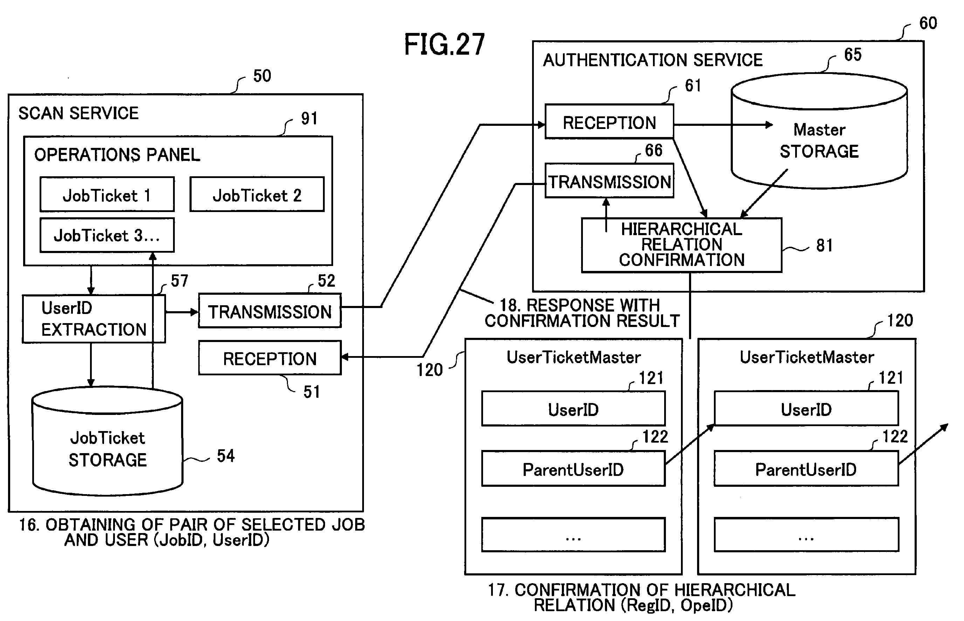

The functional configuration of exemplary scan service 50 and authentication service 60 related to job selection processing and hierarchical relation confirmation processing is shown in FIG. 27. FIG. 27 is a functional block diagram showing exemplary scan service and authentication service related to job selection processing and hierarchical relation confirmation processing.

As shown in FIG. 27, the scan service 50 includes an operations panel 91, a reception unit 51, a transmission unit 52, a JobTicket storage unit 54, and a UserID extraction unit 57. Although not shown in FIG. 27, the scan service includes an operation control unit 55.

The operations panel 91, in response to a request from the operator, for example, obtains JobTicket 100 from the JobTicket storage unit 54 via the operation control unit 55, and displays the JobTicket 100 or jobs corresponding to the JobTicket 100. The operations panel 91 sends the JobID 101 for identifying the job (or JobTicket 100) selected by the operator and the UserID 1123 of the operator inputted by the operator to the UserID extraction unit 57 via the operation control unit 55.

The UserID extraction unit 57 obtains JobTicket 100 corresponding to the JobID 101 received via the operation control unit 55, and extracts the UserID 1122 of the registrar from the obtained JobTicket 100. The UserID extraction unit 57 sends the extracted UserID 1122 of the registrar and the UserID 1123 of the operator received via the operation control unit 55 to the transmission unit 52.

The transmission unit 52 generates a request to confirm the hierarchical relation including the UserID 1122 of the registrar and the UserID 1123 of the operator, which request is transmitted to the authentication service 60.

The transmission unit 51 receives a response containing the confirmation result of the hierarchical relation confirmation request from the authentication service 60.

As shown in FIG. 27, the authentication service 60 includes a reception unit 61, a Master storage unit 65, a transmission unit 66, and a hierarchical relation confirmation unit 81.

The reception unit 61 receives the request for confirming the hierarchical relation containing the UserID 1122 of the registrar and the UserID 1123 of the operator. The reception unit 61 sends the UserID 1122 of the registrar and the UserID 1123 of the operator contained in the received hierarchical relation confirmation request to the hierarchical relation confirmation unit 81.

The hierarchical relation confirmation unit 81 obtains corresponding UserTicketMaster 1203 from the Master storage unit 65 based on the received UserID 1123 of the operator, for example, and confirms the hierarchical relation between the registrar and the operator using the ParentUserID 122 contained in the UserTicketMaster 1203 and the received UserID 1122 of the registrar.

The transmission unit 66 transmits the confirmation result received from the hierarchical relation confirmation unit 81 to the scan service 50 that has requested for the confirmation.

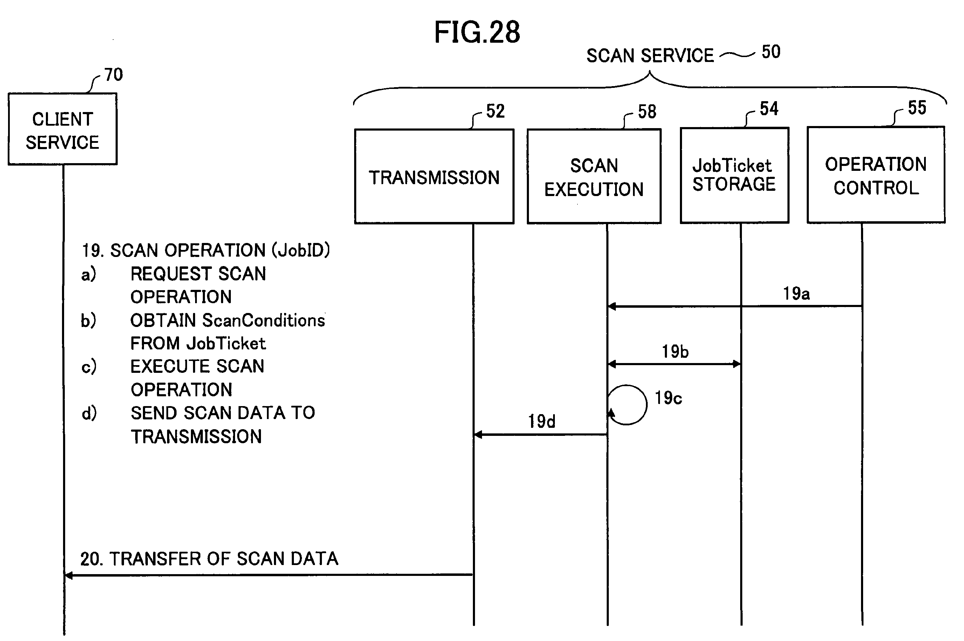

An exemplary sequence of scan execution processing is shown in FIG. 28. FIG. 28 is a sequence diagram showing an exemplary scan execution.

In response to receipt of the confirmation result indicating that the hierarchical relation is between the registrar and the operator via the reception unit 61, the operation control unit 55 displays scan start button on the operations panel 91. If a job (or JobTicket 100) is selected, and the scan start button is pressed by the operator, the operations panel 91 sends information of the selection and the pressing to the operation control unit 55. In response to receipt of the information, the operation control unit 55 sends a request to start the execution of a scan operation containing the JobID 101 specifying the selected job (or the JobTicket 100) to the scan execution unit 58 (shown in FIG. 28 as 19a).

The scan execution unit 58 obtains ScanConditions 102 of the JobTicket 100 corresponding to the received JobID 101 from the JobTicket storage unit 54 (shown in FIG. 28 as 19b), and executes the scan operation of the document set in the scanner apparatus 1 based on scan conditions indicated in the ScanConditions 102 (shown in FIG. 28 as 19c).

The scan execution unit 58 sends resulting data (scan data) to the transmission unit 52 (shown in FIG. 28 as 19d).

The transmission unit 52 transmits the scan data to the client service 70 (shown in FIG. 28 as 20).

The scan execution unit 58 is a hardware device such as a reading unit similar to the reading unit 19 of the scanner apparatus 1 in which the scan service 50 is implemented, but shown as included in the scan service 50 in FIG. 28 to make the description simple. The same is true in the following description.

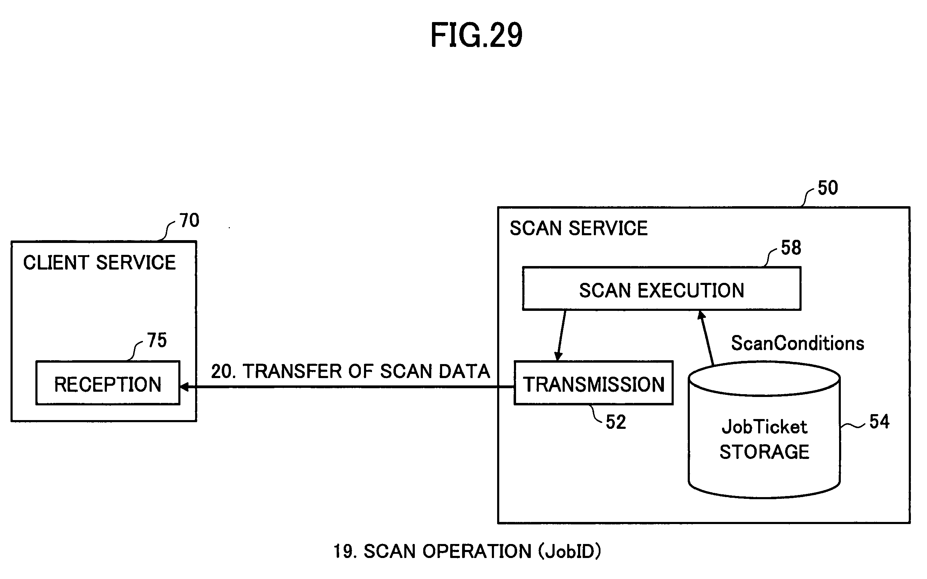

The functional configuration of an exemplary scan execution is shown in FIG. 29. FIG. 29 is a functional block diagram showing an exemplary scan service related to a scan execution operation.

As shown in FIG. 29, the scan service 50 includes the transmission unit 52, the JobTicket storage unit 54, and the scan execution unit 58.

The JobTicket storage unit 54 stores the JobTicket 100. The scan execution unit 58 receives the JobID 101 identifying the job (or JobTicket 100) selected by the operator using the operations panel 91 via the operation control unit 55. The scan execution unit 58 then obtains the ScanConditions 102 of the JobTicket 100 corresponding to the received JobID 101 from the JobTicket storage unit 54, and performs the scan operation of the document set in the scanner apparatus 1 based on the scan conditions indicated in the ScanCondition 102.

The transmission unit 52 transmits the scan data received from the scan execution unit 58 to the client service 70.

In addition, as shown in FIG. 29, the client service 70 includes a reception unit 75. The reception unit 75 receives the scan data sent by the scan service 50.

As described above, according the present invention, the scan service 50 can specify the user to avoid spoofing, to provide each user with fine-tuned services for the user, and to allow the use of resources by a user to be restricted, if necessary. In addition, as described above, according to the present invention, the scan service 50 can determine whether the JobTicket 100 is generated following due procedures involving the approver, registrar, and operator.

In addition, as described above, according to the present invention, the client service 70 can generate the UserCredentials 103 including the UserTicket 1101 of the approver, the UserTicket 1102 of the registrar, and the UserTicket 1103 of the operator, and transmits the JobTicket 100 containing the generated UserCredentials 103 to the scan service 50 for requesting to perform a job.

As described above, according to the present invention, the authentication service 60 can generate the UserTicket 110 from the UserTicketMaster 120, in response to receipt of a request from the client service 70, and provide the generated UserTicket 110 to the client service 70. The authentication service 60 can authenticate the approver, registrar, and operator in response to receipt of an authentication request from the scan service, and provide the authentication result to the scan service. The authentication service 60 further can confirm the hierarchical relation between the approver and registrar, and between the registrar and operator, and provide the confirmation result to the scan service 50.

### [SECOND EMBODIMENT]

According to a second embodiment of the present invention, only JobTicket 100 or jobs corresponding to the JobTicket 100 are displayed on the operations panel 91.

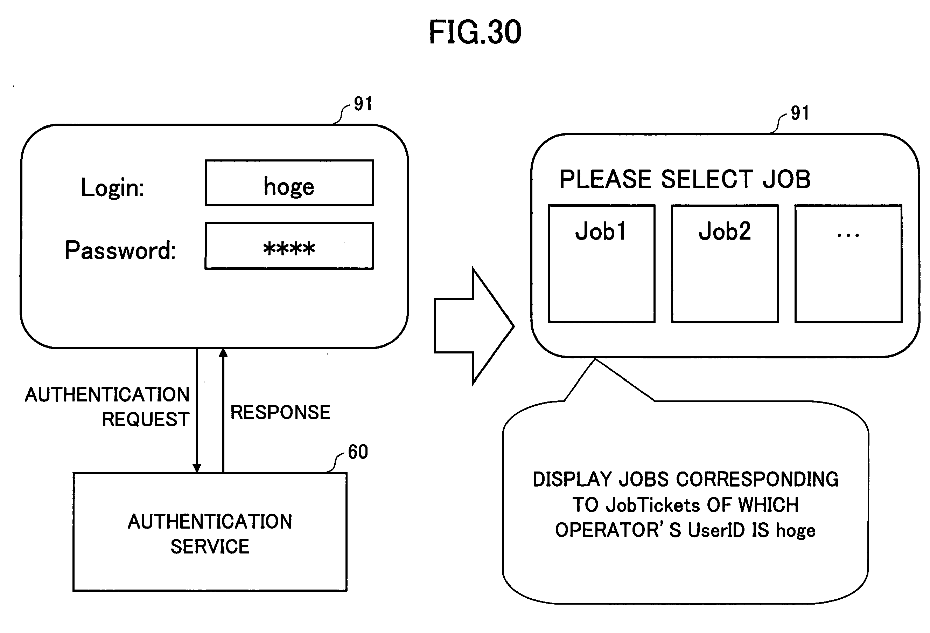

FIG. 30 is a schematic diagram showing exemplary job selection using the operations panel.

As described with reference to the first embodiment shown in FIGs. 23 and 24, for example, when the UserID 1123 ("hoge" shown in FIG. 30) and the CredentialKey 1143 are input by means of the operations panel 91 by the operator, the scan service 50 transmits a request to authenticate the operator to the authentication service 60, and receives the authentication result from the authentication service 60.

The scan service 50, in response to receipt of the authentication result indicating that the operator has been authenticated from the authentication service 60, obtains the JobTicket 100 of which the UserID 1123 of operator's UserTicket 1103 is "hoge" from the JobTicket storage unit 54, and displays the JobTicket 100 or jobs corresponding to the JobTicket 100 on the operations panel 91 as shown in FIG. 30.

According to the second embodiment, the scan service 50 becomes more secured and useful by displaying the JobTicket 100 or the jobs corresponding to the JobTicket 100 of only the authenticated user.

### [THIRD EMBODIMENT]

According to a third embodiment, the removal or change of jobs is permitted only to a user having valid CredentialKey.

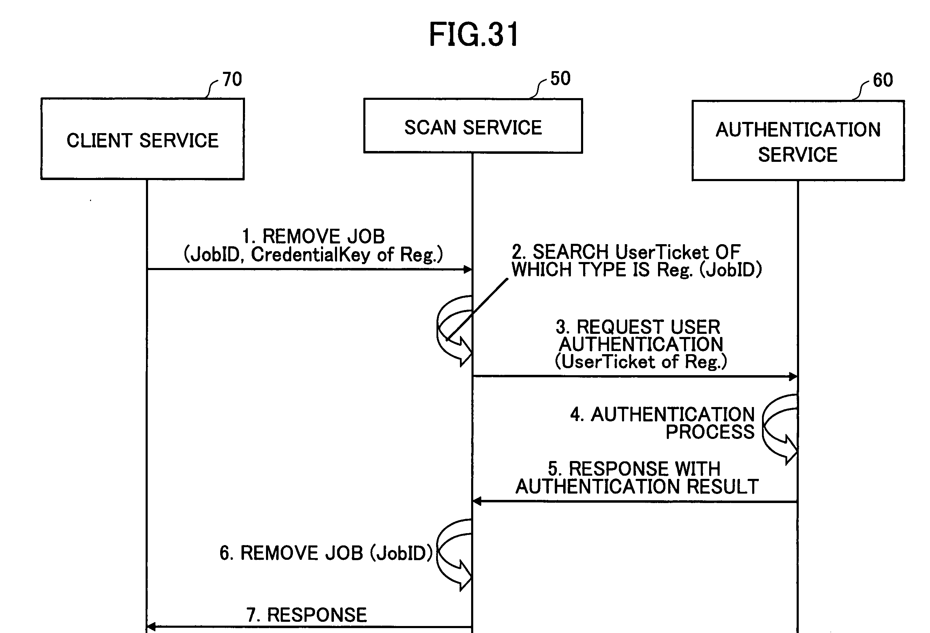

FIG. 31 is a sequence diagram showing exemplary removal or change of jobs. Only the case of removal is described below, and the description of the case of change is omitted because it is substantially the same as that of the case of removal.

The client service 70 transmits a request to remove a job to the scan service, the request containing the JobID 101 and the CredentialKey 1142 of the registrar (shown in FIG. 31 as 1).

The scan service 50, in response to receipt of the removal request from the client service 70, searches the JobTicket 100 from the JobTicket storage unit 54 based on the JobID 101 contained in the removal request, and overwrite the UserTicket 1102 of the registrar contained in the UserCredentials 103 of the JobTicket 100 with the CredentialKey 1142 contained in the removal request (shown in FIG. 31 as 2).

The scan service 50 transmits to the authentication service 60 a user authentication request containing the UserTicket 1102 of which CredentialKey 1142 is overwritten.

The authentication service 60 authenticates the registrar based on the UserTicket 1102 contained in the user authentication request received form the scan service 50 (shown in FIG. 31 as 4).

The authentication service 60 transmits a response containing the authentication result of the registrar to the scan service 50 that has requested the authentication (shown in FIG. 31 as 5).

The scan service 50, in response to receipt of the response indicating that the registrar has successfully authenticated by the authentication service 60, removes the JobTicket 100 specified by the JobID 101 from the JobTicket storage unit 54 (shown in FIG. 31 as 6).

After removing the JobTicket 100 specified by the JobID 101 from the JobTicket storage unit 54, the scan service 50 transmits a response indicating that the JobTicket 100 has been removed (deleted) to the client service 70 (shown in FIG. 31 as 7).

Only the user who has valid CredentialKey can remove or change jobs by means of processing as shown above as the third embodiment.

### [FOURTH EMBODIMENT]

According to a fourth embodiment, the JobTicket 100 can include multiple UserTickets 110 of the same Type.

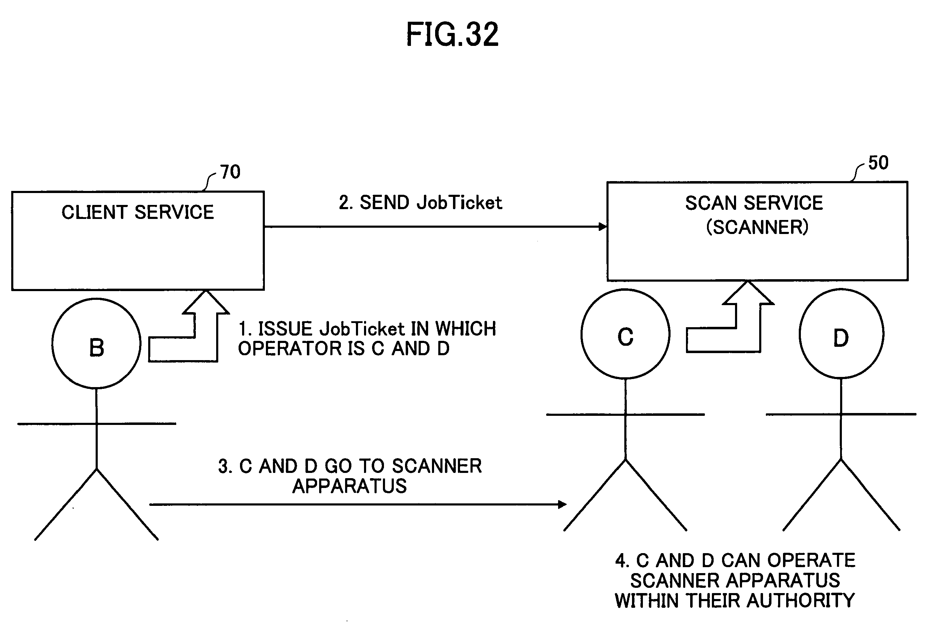

FIG. 32 is a schematic diagram showing the case in which the JobTicket 100 includes multiple UserTickets 110 of the same Type.

As shown in FIG. 32, the client service 70 issues JobTicket 100 including two operators C and D in response to a request from the registrar B, for example (shown in FIG. 32 as 1).

The client service 70 transmits the issued JobTicket 100 including two operators C and D to the scan service 50 (shown in FIG. 32 as 2).

The operators C and D go to the scanner apparatus 1 (shown in FIG. 32 as 3).

The operators C and D operate the scanner (or the scan service 50) together with their own authority (shown in FIG. 32 as 4).

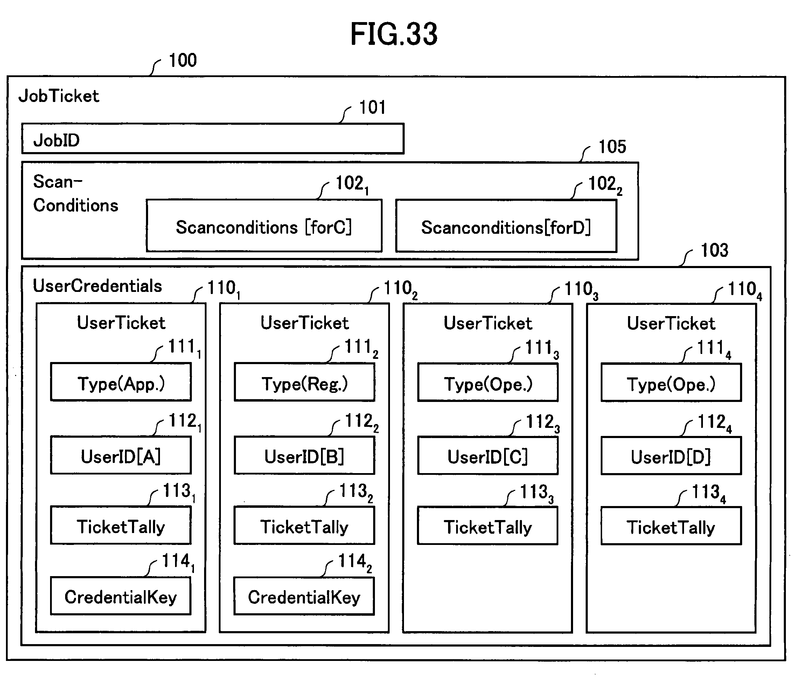

Another exemplary JobTicket 100 is shown in FIG. 33. FIG. 33 is a second schematic diagram showing the JobTicket 100.

As shown in FIG. 33, the JobTicket 100 includes the JobID 101, Scan-Conditions 105 including multiple ScanConditions 102, and UserCredentials 103.

As described above, the Scan-Conditions 105 includes multiple ScanConditions 102, specifically, the ScanConditions 102 of the operator C and the ScanConditions 102 of the operator D as shown in FIG. 33.

The UserCredentials 103 includes multiple UserTickets 110 of the same Type. In the case of an example shown in FIG. 33, the UserCredentials 103 includes the UserTicket 1103 of which type is operator, and the UserTicket 1104 of which type is operator.

According to the above arrangements, multiple users can execute a single job with their respective authority.

### [FIFTH EMBODIMENT]

According to a fifth embodiment, the ScanConditions 102 is registered by the scan service 50.

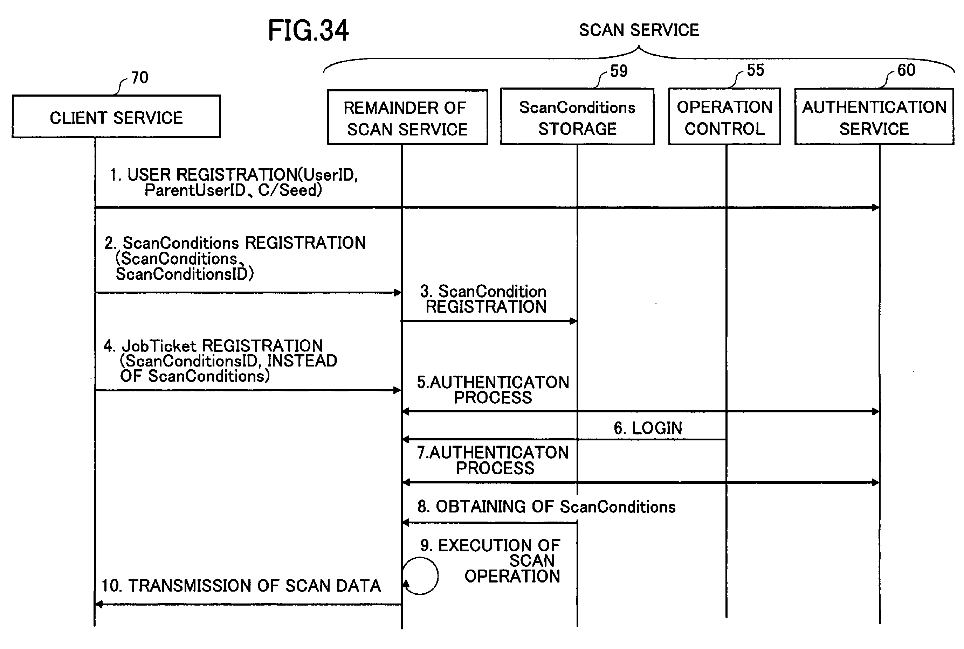

FIG. 34 is a sequence diagram showing an exemplary scan operation in which the ScanConditions is registered by the scan service.

As described in the first embodiment with reference to FIG. 11, for example, the client service 70 transmits a user registration request including the UserID 121 for identifying the user, the ParentUserID 122 for identifying an upper rank user with respect to authentication of the user specified by the UserID 121, and the CredentialSeed that bases the generation of CredentialLock 124 by the authentication service 60 (shown in FIG. 34 as 1). As described above, the user registration is performed for each of the approver, registrar, and operator.

In the next step, the client service 70 transmits a request to register the ScanConditions containing the ScanConditions 102 and ScanConditionsID for identifying the ScanConditions 102 to the scan service 50 (shown in FIG. 34 as 2).

The scan service 70, in response to receipt of the registration request of the ScanConditions from the client service 70, registers (stores) the ScanConditions 102 contained in the registration request in the ScanConditions storage unit 59 (shown in FIG. 34 as 3).

The client service 70 transmits the JobTicket 100 containing the ScanConditions ID to the scan service as a replacement of the ScanConditions 102 (shown in FIG. 34 as 4).

The scan service 50, in response to receipt of the JobTicket 100 from the client service 70, transmits the authentication request of the approver and registrar to the authentication service 60, and receives a response to the authentication request from the authentication service 60 as described in the first embodiment with reference to FIGs. 17, 18, and 19 (shown in FIG. 34 as 5).

In the next step, the operator inputs the UserID 1123 and the CredentialKey 1143 to the operations panel 91, and logs in to the scan service 50 via the operation control unit 55, as described in the first embodiment with reference to FIG. 24 (shown in FIG. 34 as step 6).

The scan service 50 transmits an authentication request of the operator to the authentication service 60, and receives a response to the authentication request from the authentication service 60, as described in the first embodiment with reference to FIGs. 23 and 24, for example (shown in FIG. 34 as 7).

In the next step, the scan service 50 obtains the ScanConditionsID contained in corresponding JobTicket 100 based on the JobTicket 100 or job corresponding to the JobTicket 100 selected by the operator, and further obtains corresponding ScanConditions 102 from the ScanConditions storage unit 59 based on the ScanConditionsID (shown in FIG. 34 as 8).

The scan service 50 performs the scan operation of the document set in the scanner apparatus 1 based on the scan conditions indicated in the obtained ScanConditions 102 (shown in FIG. 34 as 9).

The scan service unit 50 transmits the resulting data (scan data) to the client service 70 (shown in FIG. 34 as 10).

The ScanConditions storage unit 59 is a hardware device such as a HDD similar to the HDD 18 of the scanner apparatus 1 in which the scan service 50 is implemented, but shown as included in the scan service 50 in FIG. 34 to make the description simple.

According to the above arrangements, the scan operation can be performed using the same scan conditions as the previously performed scan conditions (or default scan conditions), if desired, by designating the ScanConditions 102 registered in the ScanConditions storage unit 59 of the scan service 50 without setting the ScanConditions 102.

### [SIXTH EMBODIMENT]

According to a sixth embodiment, the ScanConditions 102 includes restriction related to a scan operation.

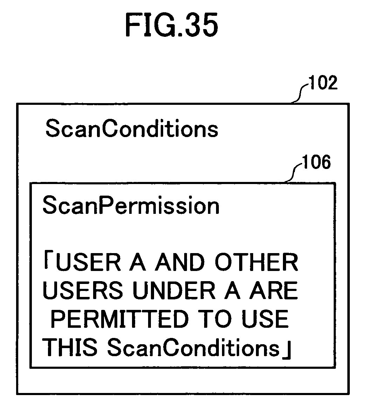

FIG. 35 is a schematic diagram showing ScanConditions including ScanPermission that restricts the execution of a scan operation.

As shown in FIG. 35, the ScanConditions 102 includes the ScanPermission 106 that restricts the execution of a scan operation.

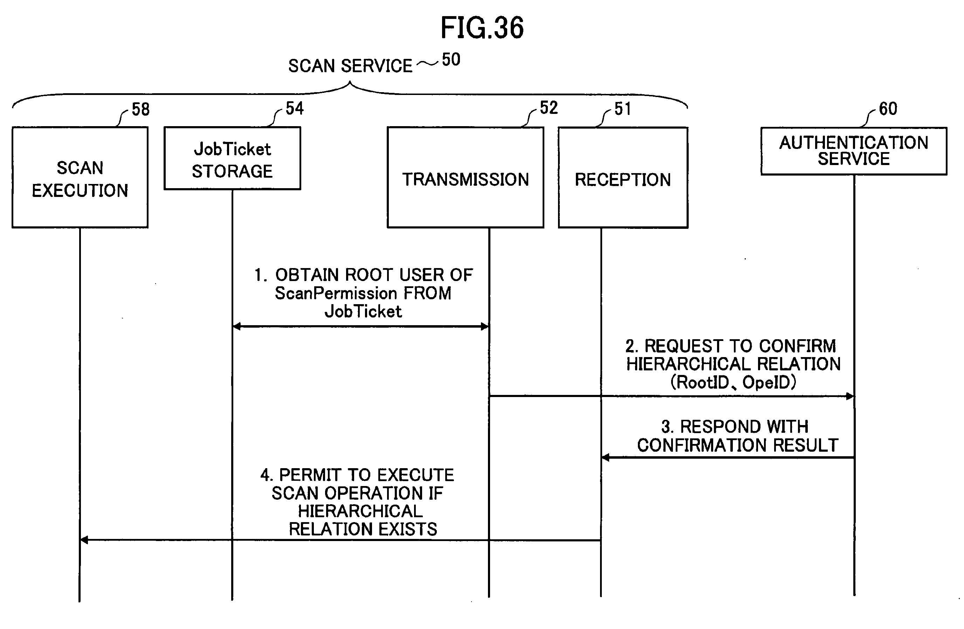

The sequence of exemplary process of confirmation of hierarchical relation and scan execution by the scan service 50 in which the ScanPermission 106 is included in the ScanConditions 102 is shown in FIG. 36. FIG. 36 is a sequence diagram showing the sequence of exemplary process of confirmation of hierarchical relation and scan execution by the scan service 50 in which the ScanPermission 106 is included in the ScanConditions 102. In FIG. 36, steps following step 15 shown in FIG. 24 according to the first embodiment is shown.

The transmission unit 52 of the scan service 50 obtains RootID for identifying a Root user (for example, user A in FIG. 35) of the ScanPermission 106 from the ScanConditions 102 of the JobTicket 100 that is the job selected by the operator (shown in FIG. 36 as step 1).

The transmission unit 52 generates a request to confirm the hierarchical relation including the obtained RootID and the UserID 1123 of the operator input by the operator, and transmits the request to the authentication service 60 (shown in FIG. 36 as step 2).

The authentication service 60, in response to a request to confirm hierarchical relation from the scan service 50, determines whether the operator is under the Root user, and transmits a response including the determination to the scan service 50 (shown in FIG. 36 as step 3).

The reception unit 51 of the scan service 50, in response to receipt of the response including the determination that the operator is under the Root user, permits the scan execution unit 58, for example, the execution of a scan operation (shown in FIG. 36 as step 4).

According to the above arrangements, the execution of a scan operation can be restricted user by user, if desired. An example of restriction may include restrictions on the number of pages to be scanned, resolution, the amount of data to be transferred, and expiry date, as well as the hierarchical relation between the users.

The preferred embodiments of the present invention are described above. The present invention is not limited to these embodiments, but variations and modifications may be made without departing from the scope of the present invention.

This patent application is based on Japanese priority patent applications No. 2004-308313 filed on October 22, 2004, and No. 2005-259435 filed on September 7, 2005, the entire contents of which are hereby incorporated by reference.

## Claims

1. A scanner apparatus, comprising:
an operations panel;
a scan execution unit;
a scan service providing unit configured to provide services related to a scan operation; and
a JobTicket storage unit configured to store a JobTicket related to the scan operation, the JobTickets including verification information of users,
wherein
said scan service providing unit requests an authentication service providing unit to authenticate a user based on the verification information of the user included in the JobTicket stored in said JobTicket storage unit, the authentication service providing unit configured to provide service related to authentication; and
said scan execution unit executes the scan operation in accordance with scan conditions included in the JobTicket selected by the user via said operations panel.

2. The scanner apparatus as claimed in claim 1,
wherein
the verification information of the user includes the authentication ticket of an operator who operates the scanner apparatus, the authentication ticket of an operation approver who approved the operation of the operator, and the authentication ticket of an issuance approver who approved the issuance of the JobTicket.

3. The scanner apparatus as claimed in claim 2,
wherein
said scan service providing unit requests the authentication service providing unit to authenticate the operator, the operation approver, and the issuance approver based on the authentication tickets included in the JobTicket.

4. The scanner apparatus as claimed in claim 2,
wherein said scan service providing unit confirms the hierarchical relation between the issuance approver and the operation approver with respect to authentication and the hierarchical relation between the operation approver and the operator based on the authentication tickets included in the JobTicket.

5. The scanner apparatus as claimed in claim 2,
wherein said scan service providing unit displays the JobTicket related to the authenticated operator on the operations panel.

6. The scanner apparatus as claimed in claim 1,
wherein
if a request to change or delete the JobTicket includes verification information of the user that is valid, said scan service providing unit allows the JobTicket to be changed or deleted.

7. The scanner apparatus as claimed in claim 2,
wherein
the verification information of the user includes a plurality of authentication tickets of the same type.

8. The scanner apparatus as claimed in claim 1,
wherein
the JobTicket includes restriction on the scan operation in dependence on the user.

9. A scan service usage apparatus, comprising:
a scan service usage unit configured to use scan services provided by a scan service providing unit; and
an authentication ticket storage unit configured to store authentication ticket of a user,
wherein
said scan service usage unit generates verification information of a user including the authentication ticket stored in said authentication ticket storage unit, and transmits a JobTicket related to a scan operation including the verification information of the user to the scan service providing unit.

10. The scan service usage apparatus as claimed in claim 9,
wherein
the verification information of the user includes the authentication ticket of an operator who operates the scanner apparatus, the authentication ticket of an operation approver who approved the operation of the operator, and the authentication ticket of an issuance approver who approved the issuance of the JobTicket.

11. The scan service usage apparatus as claimed in claim 9,
wherein
said scan service usage unit transmits a request to register the user including the user identifier for identifying the user and an upper rank user identifier for identifying an upper rank user with respect to authentication to the user to an authentication service providing unit configured to provide services related to authentication.

12. An authentication service providing apparatus, comprising:
an authentication service providing unit configured to provide services related to authentication; and
a master authentication ticket storage unit configured to store masters of authentication tickets;
wherein
said authentication service providing unit, in response to receipt of a request to register the user including the user identifier for identifying the user and an upper rank user identifier for identifying an upper rank user with respect to authentication, generates a master authentication ticket including the user identifier and the upper rank user identifier, and stores the generated master authentication ticket to said master authentication ticket storage unit.

13. The authentication service providing apparatus as claimed in claim 12,
wherein
said authentication service providing unit, in response to receipt of a request to generate an authentication ticket from a scan service usage unit that uses scan service provided by a scan service providing unit, the request including the user identifier, generates the authentication ticket from corresponding master authentication ticket, and provides the generated authentication ticket to the requesting scan service usage unit.

14. The authentication service providing apparatus as claimed in claim 12,
wherein
said authentication service providing unit confirms the hierarchical relation between the users, based on a request to confirm the hierarchical relation between the users from the scan service providing unit that provides scan services, the request including a first and second user identifiers for identifying the users, and provides the resulting confirmation of the hierarchical relation to the scan service providing unit.

15. The authentication service providing apparatus as claimed in claim 14,
wherein
the hierarchical relation between the users that is confirmed by said authentication service providing unit is the hierarchical relation between an operator that operates the scan apparatus and an operation approver that has approved the operation of the operator, or the hierarchical relation between the operation approver and an issuance approver that has approved the issuance of the JobTicket related to a scan operation.

16. A scan service computer program product including a computer program that causes a computer to function as a scan service providing unit that provides services related to a scan operation,
wherein
the scan service providing unit requests an authentication service providing unit that provides services related to authentication to authenticate a user based on verification information of the user included in a JobTicket stored in a JobTicket storing unit.

17. The scan service computer program product as claimed in claim 16,
wherein
the verification information of the user includes the authentication ticket of an operator who operates the scanner apparatus, the authentication ticket of an operation approver who approved the operation of the operator, and the authentication ticket of an issuance approver who approved the issuance of the JobTicket.

18. The scan service computer product as claimed in claim 16,
wherein
the scan service providing unit confirms the hierarchical relation with respect to authentication between the issuance approver and the operation approver and the hierarchical relation with respect to authentication between the operation approver and the operator, using the scan service providing unit uses the authentication service providing unit, based on the authentication ticket included in the JobTicket.

19. A scan service usage program product including a computer program that causes a computer to function as a scan service usage unit that uses scan services provided by a scan service providing unit,
wherein
the scan service usage unit generates verification information of a user including an authentication ticket stored in authentication ticket storage unit for storing user's authentication tickets, and transmits a JobTicket related to a scan operation including verification information of the user to the scan service.

20. The scan service usage program product as claimed in claim 19,
wherein
the verification information of the user includes the authentication ticket of an operator who operates the scanner apparatus, the authentication ticket of an operation approver who approved the operation of the operator, and the authentication ticket of an issuance approver who approved the issuance of the JobTicket.

21. The scan service usage program product as claimed in claim 19,
wherein
said scan service usage unit transmits a request to register the user including the user identifier for identifying the user and an upper rank user identifier for identifying an upper rank user with respect to authentication to the user to an authentication service providing unit configured to provide services related to authentication.

22. An authentication service program product including a computer program that causes a computer to function as an authentication service providing unit that provide services related to authentication,
wherein
said authentication service providing unit, in response to receipt of a request to register the user including the user identifier for identifying the user and an upper rank user identifier for identifying an upper rank user with respect to authentication, generates a master authentication ticket including the user identifier and the upper rank user identifier, and stores the generated master authentication ticket to said master authentication ticket storage unit.

23. The authentication service program as claimed in claim 22,
wherein
said authentication service providing unit, in response to receipt of a request to register the user including the user identifier for identifying the user and an upper rank user identifier for identifying an upper rank user with respect to authentication, generates a master authentication ticket including the user identifier and the upper rank user identifier, and stores the generated master authentication ticket to said master authentication ticket storage unit.

24. The authentication service program product as claimed in claim 22,
wherein
said authentication service providing unit confirms the hierarchical relation between the users, based on a request to confirm the hierarchical relation between the users from the scan service providing unit that provides scan services, the request including a first and second user identifiers for identifying the users, and provides the resulting confirmation of the hierarchical relation to the scan service providing unit.

25. A method of executing a scan operation in a scanner apparatus comprising a scan service unit for providing scan services and a scan execution unit for executing scan operations, the method comprising:
receiving a selection of a JobTicket from a user including verification information of the user and scan conditions of a scan operation;
requesting, by the scan service unit, an authentication service unit to authenticate the user using the verification information included in the JobTicket;
if the authentication service unit authenticates the user in response to the authentication request from the scan service unit, executing, by the scan execution unit, the scan operation corresponding to the JobTicket in accordance with the scan conditions included in the JobTicket.

26. The method as claimed in claim 25,
wherein the verification information includes an authentication ticket of an operator who operates the scanner apparatus, an authentication ticket of an operation approver who has approved the operator to operate the scanner apparatus, and an authentication ticket of an issuance approver who has approved the issuance of the JobTicket.

27. The method as claimed in claim 26, further comprising:
confirming, by the scan service providing unit, the hierarchical relation with respect to authentication between the issuance approver and the operation approver, and the hierarchical relation with respect to authentication between the operation approver and the operator.

28. A method of using scan services for a scan service usage apparatus comprising a scan service usage unit, the method comprising:
obtaining, by the scan service usage unit, the authentication ticket from an authentication ticket storage unit that stores authentication ticket of a user, and generating verification information of the user including the authentication ticket;
transmitting, by the scan service usage unit, a JobTicket related to a scan operation including verification information of the user generated in the step of generating, to a scan service providing unit that provides scan service.

29. The method as claimed in claim 28,
wherein
the verification information of the user includes the authentication ticket of an operator who operates the scanner apparatus, the authentication ticket of an operation approver who approved the operation of the operator, and the authentication ticket of an issuance approver who approved the issuance of the JobTicket.

30. The method as claimed in claim 28,
wherein
transmitting, by said scan service usage unit, a request to register the user including the user identifier for identifying the user and an upper rank user identifier for identifying an upper rank user with respect to authentication to the user to an authentication service providing unit configured to provide services related to authentication.

31. A method of providing authentication service for an authentication service providing apparatus comprising an authentication service that provides services related to authentication, the method comprising:
generating, by the authentication service providing unit, in response to a request to register the user including the user identifier for identifying the user and an upper rank user identifier for identifying an upper rank user with respect to authentication, a master authentication ticket including the user identifier and the upper rank user identifier; and
storing the generated master authentication ticket in a master authentication ticket storage unit.

32. The method as claimed in claim 31, further comprising:
generating, by the authentication service providing unit, in response to a request to generate an authentication ticket including the user identifier from a scan service usage unit, the authentication ticket from the corresponding master authentication ticket.

33. The method as claimed in claim 31, further comprising:
confirming, by said authentication service providing unit, the hierarchical relation between the users, based on a request to confirm the hierarchical relation between the users from the scan service providing unit that provides scan services, the request including a first and second user identifiers for identifying the users.
